(19) Europäisches Patentamt
European Patent Office
Office européen des brevets

(11) **EP 4 346 201 A1**

(12) **EUROPEAN PATENT APPLICATION**

(43) Date of publication:
**03.04.2024 Bulletin 2024/14**

(21) Application number: **22306423.9**

(22) Date of filing: **27.09.2022**

(51) International Patent Classification (IPC):
*H04N 19/105* (2014.01)     *H04N 19/176* (2014.01)
*H04N 19/593* (2014.01)

(52) Cooperative Patent Classification (CPC):
**H04N 19/593; H04N 19/105; H04N 19/176**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.
Beijing 100085 (CN)**

(72) Inventors:
• **ANDRIVON, Pierre**
  **35340 LIFFRE (FR)**
• **LE LEANNEC, Fabrice**
  **35830 BETTON (FR)**
• **RADOSAVLJEVIC, Milos**
  **35000 RENNES (FR)**

(74) Representative: **RVDB Rennes
44 rue Lariboisière
35235 Thorigné-Fouillard (FR)**

(54) **ENCODING/DECODING VIDEO PICTURE DATA**

(57)   The present invention relates to a method of intra-predicting a block of a video picture according to a first intra-prediction mode using a first geometry transform identified by a first geometry transform type. The method determines (510) whether at least one neighboring block is predicted according to a second intra-prediction mode using a second geometry transform identified by a second geometry transform type and, if at least one neighboring block is predicted according to the second intra-prediction mode, the first geometry transform type is inferred (520) from said second geometry transform type.

Fig. 13

**Description**

FIELD

The present application generally relates to video picture encoding and decoding. Particularly, but not exclusively, the technical field of the present application is related to intra-prediction of a video picture block.

BACKGROUND

The present section is intended to introduce the reader to various aspects of art, which may be related to various aspects of at least one exemplary embodiment of the present application that is described and/or claimed below. This discussion is believed to be helpful in providing the reader with background information to facilitate a better understanding of the various aspects of the present application. Accordingly, it should be understood that these statements are to be read in this light, and not as admissions of prior art.

In the state-of-the-art video compression systems such as HEVC (ISO/IEC 23008-2 High Efficiency Video Coding, ITU-T Recommendation H.265, https://www.itu.int/rec/T-REC-H.265-202108-P/en) or VVC (ISO/IEC 23090-3 Versatile Video Coding, ITU-T Recommendation H.266, https://www.itu.int/rec/T-REC-H.266-202008-I/en, low-level and high-level picture partitioning are provided to divide a video picture into picture areas so-called Coding-Tree Units (CTU) which size may be typically between 16x16 and 64x64 pixels for HEVC and 32x32, 64x64, or 128x128 pixels for VVC.

The CTU division of a video picture forms a grid of fixed size CTUs, namely a CTU grid, which upper and left bounds spatially coincide with the top and left borders of the video picture. The CTU grid represents a spatial partition of the video picture.

In VVC and HEVC, the CTU size (CTU width and CTU height) of all the CTUs of a CTU grid equals a same default CTU size (default CTU width **CTU DW** and default CTU height **CTU DH**). For example, the default CTU size (default CTU height, default CTU width) may equal to 128 **(CTU DW=CTU DH=128)**. A default CTU size (height, width) is encoded into the bitstream, for example at a sequence level in the Sequence Parameter Set (SPS).

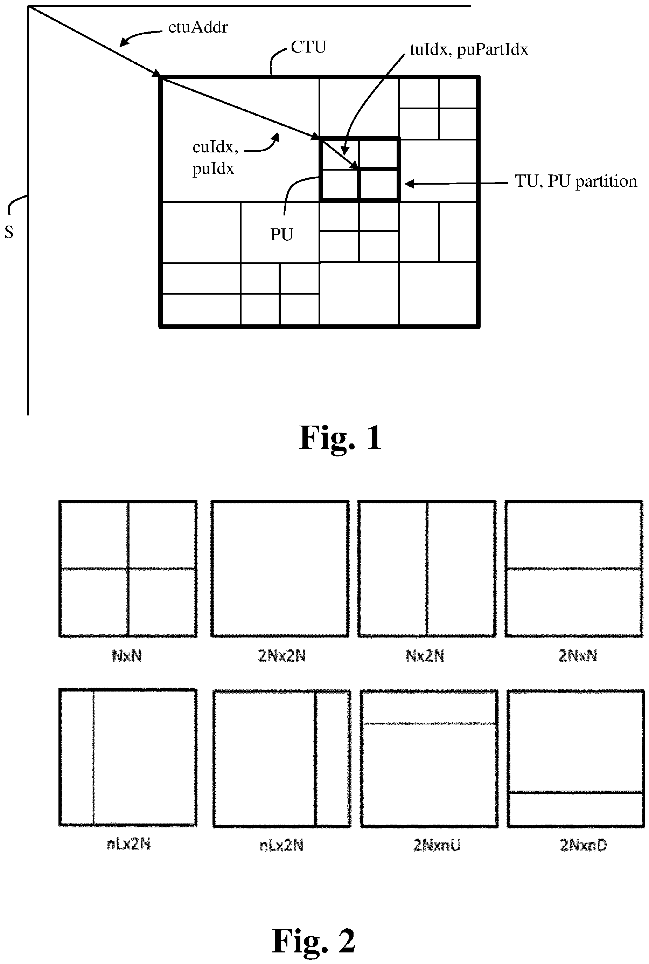

The spatial position of a CTU in a CTU grid is determined from a CTU address **ctuAddr** defining a spatial position of the top-left corner of a CTU from an origin. As illustrated on **Figure 1,** the CTU address may define the spatial position from the top-left corner of a higher-level spatial structure S containing the CTU.

A coding tree is associated with each CTU to determine a tree-division of the CTU.

As illustrated on **Figure 1,** in HEVC, the coding tree is a quad-tree division of a CTU, where each leaf is called a Coding Unit (CU). The spatial position of a CU in the video picture is defined by a CU index **cuIdx** indicating a spatial position from the top-left corner of the CTU. A CU is spatially partitioned into one or more Prediction Units (PU). The spatial position of a PU in the video picture VP is defined by a PU index **puIdx** defining a spatial position from the top-left corner of the CTU and the spatial position of an element of a partitioned PU is defined by a PU partition index **puPartIdx** defining a spatial position from the top-left corner of a PU. Each PU is assigned some intra or inter prediction data.

The coding mode intra or inter is assigned on the CU level. That means that a same intra/inter coding mode is assigned to each PU of a CU, though the prediction parameters varying from PU to PU.

A CU may be also spatially partitioned into one or more Transform Units (TU), according to a quad-tree called the transform tree. Transform Units are the leaves of the transform tree. The spatial position of a TU in the video picture is defined by a TU index **tuIdx** defining a spatial position from the top-left corner of a CU. Each TU is assigned some transform parameters. The transform type is assigned on the TU level, and 2D separate transform is performed at TU level during the coding or decoding of a picture block.

The PU Partition types existing in HEVC are illustrated on **Figure** 2. They include square partitions (2Nx2N and NxN), which are the only ones used in both Intra and Inter predicted CUs, symmetric non-square partitions (2NxN, Nx2N, used only in Inter predicted CUs), and asymmetric Partitions (used only in Inter predicted CUs). For instance, the PU type 2NxnU stands for an asymmetric horizontal partitioning of the PU, where the smaller partition lies on the top of the PU. According to another example, PU type 2NxnL stands for an asymmetric horizontal partitioning of the PU, where the smaller partition lies on the top of the PU.

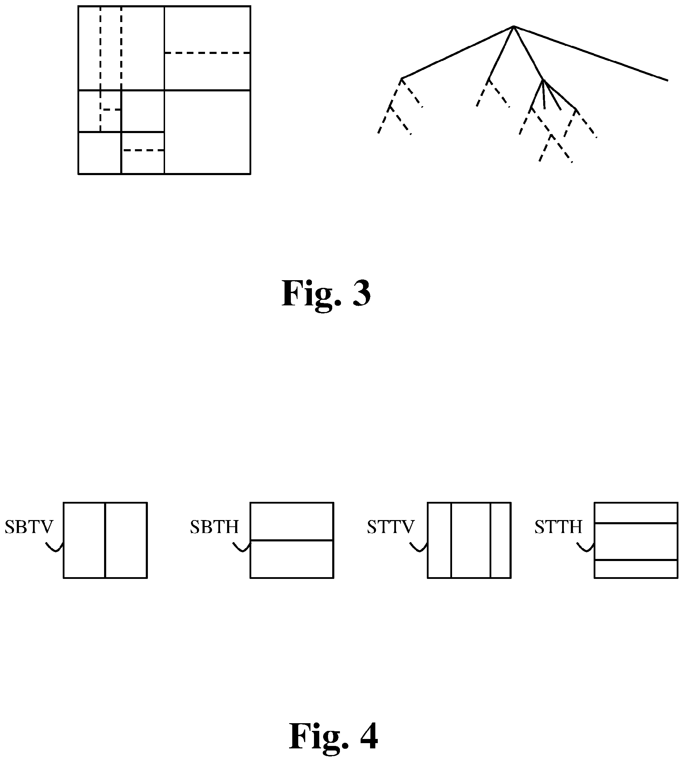

As illustrated on **Figure 3,** in VVC, the coding tree starts from a root node, i.e. the CTU. Next, a quad-tree (or quaternary tree) split divides the root node into 4 nodes corresponding to 4 sub-blocks of equal sizes (solid lines). Next, the quaternary tree (or quad-tree) leaves can then be further partitioned by a so-called multi-type tree, which involves a binary or ternary split according to one of 4 split modes illustrated on **Figure 4.** These split types are the vertical and horizontal binary split modes, noted SBTV and SBTH and the vertical and horizontal ternary split modes SPTTV and STTH.

The leaves of the coding tree of a CTU are CU in the case of a joint coding tree shared by luma and chroma components.

Contrary to HEVC, in VVC, in most cases, CU, PU and TU have equal size, which means coding units are generally not partitioned into PU or TU, except in some specific coding modes.

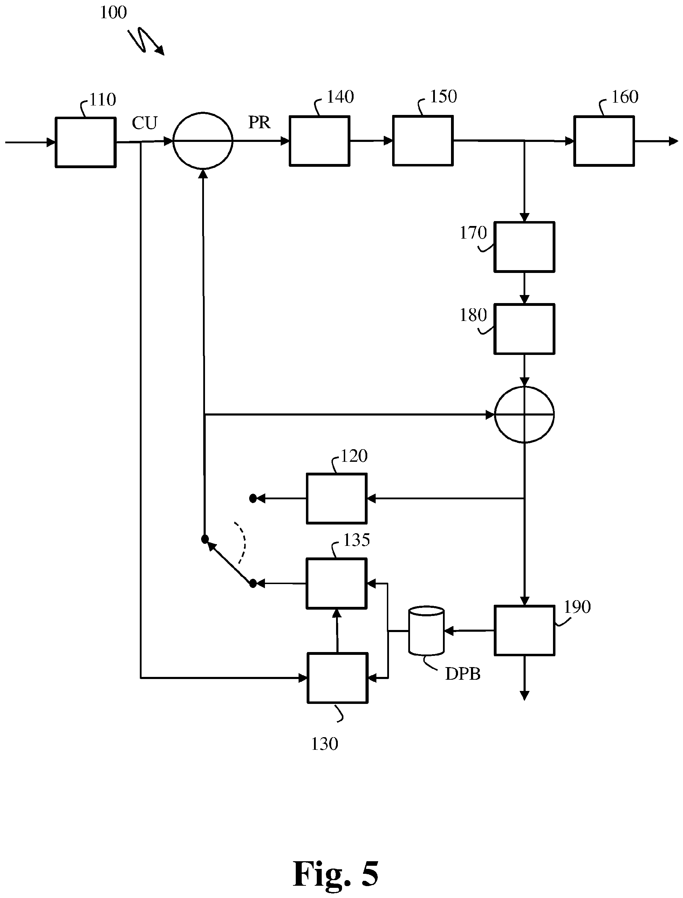

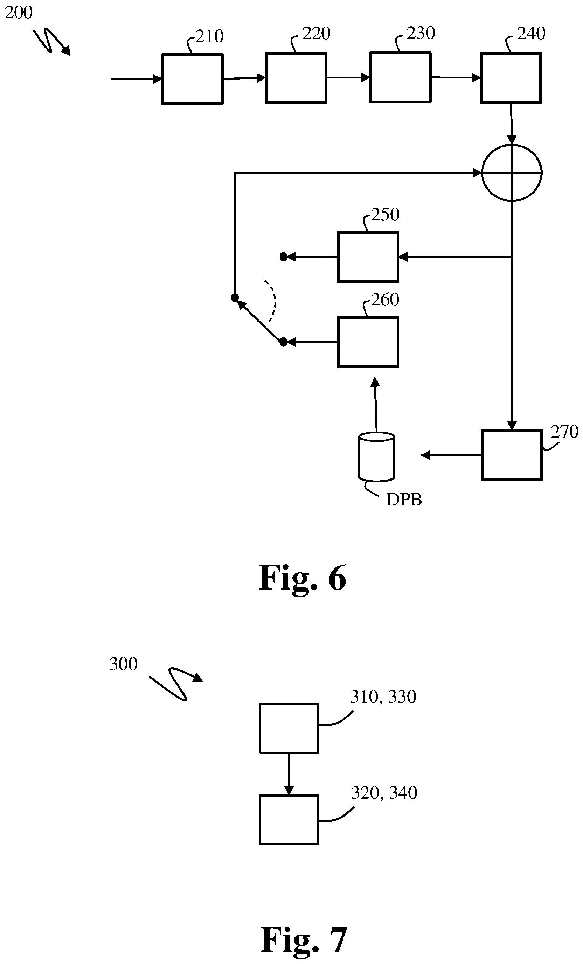

**Figures 5** and **6** provide an overview of video encoding/decoding methods used in current video standard compression systems like VVC for example.

**Figure 5** shows a schematic block diagram of steps of a method 100 of encoding a video picture VP in accordance with prior art.

In step 110, a video picture VP is partitioned into a CTU grid and partitioning information data is signaled into a bitstream B. A coding tree is associated with each CTU of the CTU grid, each CU of a coding tree associated with each CTU being a block of samples of the video picture VP. In short, a CU of a CTU is a block.

CTUs of the CTU grid are considered along a scanning order, usually a raster scan order of the video picture. Each block of a CTU is also considered along a scanning order, usually a raster scan order of blocks of the CTU.

Each block of each CTU is then encoded using either an intra or inter prediction coding mode.

Intra prediction (step 120) consists in predicting a current block by means of a predicted block based on already encoded, decoded and reconstructed samples located around the current block, typically on the top and on the left of the current block. Intra prediction is performed in the spatial domain.

In inter prediction mode, motion estimation (step 130) and motion compensation (step 135) are performed. Motion estimation searches, in one or more reference video picture(s) used to predictively encode the current video picture, a candidate reference block that is a good predictor of the current block. For instance, a good predictor of the current block is a predictor which is similar to the current block. The output of the motion estimation step 130 is one or more motion vectors and reference picture index (or indices) associated to the current block. Next, motion compensation (step 135) obtains a predicted block by means of the motion vector(s) and reference picture index (indices) determined by the motion estimation step 130. Basically, the block belonging to a selected reference picture and pointed to by a motion vector may be used as the predicted block of the current block. Furthermore, since motion vectors are expressed in fractions of integer pixel positions (which is known as sub-pel accuracy motion vector representation), motion compensation generally involves a spatial interpolation of some reconstructed samples of the reference picture to compute the predicted block samples.

Prediction information data is signaled in the bitstream B. The prediction information may comprise a prediction mode, prediction information coding mode, intra prediction mode or motions vector(s) and reference picture index (or indices) and any other information used for obtaining a same predicted block at the decoding side.

The method 100 selects one of the intra mode or inter coding mode by optimizing a rate-distortion trade-off taking into account the encoding of a prediction residual block calculated, for example, by subtracting a candidate predicted block from the current block, and the signaling of prediction information data required for determining said candidate predicted block at the decoding side.

Usually, the best prediction mode is given as being the prediction mode of a best coding mode p* for a current block given by:

$$p^* = \underset{p \in P}{\mathrm{Argmin}}\{RD_{cost}(p)\} \quad (1)$$

where $P$ is the set of all candidate coding modes for the current block, $p$ represents a candidate coding mode in that set, $RD_{cost}(p)$ is a rate-distortion cost of candidate coding mode $p$, typically expressed as:

$$RD_{cost(p)} = D(p) + \lambda . R(p) .$$

$D(p)$ is the distortion between the current block and a reconstructed block obtained after encoding/decoding the current block with the candidate coding mode $p$, $R(p)$ is a rate cost associated with the coding of the current block with coding mode $p$, and $\lambda$ is the Lagrange parameter representing the rate constraint for coding the current block and typically computed from a quantization parameter used for encoding the current block.

The current block is usually encoded from a prediction residual block PR. More precisely, a prediction residual block PR is calculated, for example, by subtracting the best predicted block from the current block. The prediction residual block PR is then transformed (step 140) by using, for example, a DCT (discrete cosine transform) or DST (Discrete Sinus transform) type transform, and the obtained transformed coefficient block is quantized (step 150).

In variant, the method 100 may also skip the transform step 140 and apply quantization directly to the prediction residual block PR, according to the so-called transform-skip coding mode.

Quantized transform coefficient block (or quantized prediction residual block) is entropy encoded into the bitstream B (step 160).

Next, the quantized transform coefficient block (or the quantized residual block) is de-quantized (step 170) and inverse transformed (180) (or not), leading to a decoded prediction residual block. The decoded prediction residual block and the predicted block are then combined, typically summed, which provides the reconstructed block.

Other information data may also be entropy encoded for encoding a current block of the video picture VP.

In-loop filters (step 190) may be applied to a reconstructed picture (comprising reconstructed blocks) to reduce compression artefacts. Loop filter may apply after all picture blocks are reconstructed. For instance, they consist in deblocking filter, Sample Adaptive Offset (SAO) or adaptive loop filter.

The reconstructed blocks or the filtered reconstructed blocks form a reference picture that may be stored into a decoded picture buffer (DPB) so that it can be used as a reference picture for the encoding of a next current block of the video picture VP, or of a next video picture to encode.

**Figure 6** shows a schematic block diagram of steps of a method 200 of decoding a video picture VP in accordance with prior art.

In step 210, partitioning information data, prediction information data and quantized transform coefficient block (or quantized residual block) are obtained by entropy decoding a bitstream B.

Partitioning information data defines a CTU grid (arrangement) over the video picture. The CTU grid splits the video picture VP into multiple CTUs. CTUs of the CTU grid are considered along a scanning order, usually a raster scan order of the video picture VP. Blocks of a considered CTU are also considered along a scanning order, usually a raster scan order of blocks of the CTU.

Other information data may also be decoded from the bitstream B for decoding a current block of a current CTU of CTU grid.

In step 220, each current block of a current CTU is entropy decoded.

Each decoded current blocks may be either a quantized transform coefficient block or quantized prediction residual block.

In step 230, a current block (of a current CTU) is de-quantized and possibly inverse transformed (step 240), to obtain a decoded prediction residual block.

On the other hand, the prediction information data is used to predict the current block. A predicted block is obtained through its intra prediction (step 250) or its motion-compensated temporal prediction (step 260). The prediction process performed at the decoding side is identical to that of the encoding side.

Next, the decoded prediction residual block and the predicted block are then combined, typically summed, which provides a reconstructed block.

In step 270, in-loop filters may apply to a reconstructed picture (comprising reconstructed blocks) and the reconstructed blocks or the filtered reconstructed blocks form a reference picture that may be stored into a decoded picture buffer (DPB) as above discussed (**Figure 5**).

Intra block copy (IBC) prediction mode is used in HEVC and VVC for screen content coding. It is well known that IBC prediction mode significantly improves the coding efficiency of screen content materials. Since IBC prediction mode is implemented as a block level coding mode, block matching (BM) is performed at the encoder to find an optimal block vector (or motion vector) for each block to be predicted. A block vector indicates the displacement from a block to be predicted of a video picture to a reference block, i.e., a prediction block of a reconstructed area of the video picture, which is already reconstructed (decoded) inside said video picture. A block vector of an IBC predicted block of luma samples is in integer precision. A block vector of an IBC predicted block of chroma samples rounds to integer precision as well. When combined with AMVR (Adaptive Motion Vector Resolution tools allowing signaling motion vector differences with quarter-pel, half-pel, integer-pel or 4-pel luma sample resolutions), the IBC prediction mode can switch between 1-pel and 4-pel motion vector precisions. The IBC prediction mode is treated as the third prediction mode other than intra or inter prediction modes.

At CU level, IBC prediction mode is signalled as prediction information with a flag that indicates either an IBC-AMVP mode or an IBC-skip/merge mode is used.

In the IBC-skip/merge mode, a block vector used to define an IBC predicted block is represented by one merge index indicating an element in a list of block vector prediction candidates (merge candidate list). The merge candidate list may comprise spatial, HMVP, and pairwise block vectors candidates.

HMVP (History-based Motion Vector Prediction) involves a buffer of block vector (motion vector) candidates which is fed as long as block of the video picture are being predicted by using an IBC prediction mode. The HMVP buffer is used to provide block vector candidate for predicting a current block of the video picture by using an IBC prediction mode.

For HMVP, block vectors are inserted into history buffer for future referencing.

A pairwise block vector candidate can be generated by averaging two IBC block vector candidates, i.e. block vectors derived from IBC prediction modes. This means the two first block vector candidates in the merge candidate list under construction are averaged to form a so-called pairwise block vector candidate. This pairwise block vector candidate is added to the merge candidate list after the HMVP candidate.

In the IBC-AMVP mode, two block vectors are determined, one from left neighbor of the block to be predicted and one from above neighbor of the block to be predicted. When either neighbor is not available, a default block vector is considered. A flag is signaled as prediction information to indicate which block vector is used to predict the block vector of current block. Indeed, since at most 2 block vectors candidates are considered in IBC-AMVP mode, a flag is sufficient to identify the block vector candidate used for the coding of the block vector information. Block vector difference is coded in the same way as a motion vector difference of inter-predicted blocks.

IBC prediction mode cannot be used in combination with inter prediction tools of VVC such as CIIP and MMVD.

Reconstruction-Reordered IBC (RR-IBC) mode (Non-EE2: Reconstruction-Reordered IBC for screen content coding, Z. Deng et al, JVET-Z0159, April 2022) reorders IBC coded reconstruction blocks with either a horizontal or a vertical flip which mode is signalled. RR-IBC mode may be either a RR-IBC-AMVP mode or a RR-IBC-skip/merge mode. RR-IBC-AMVP mode indicates IBC-AMVP mode in which IBC coded reconstruction blocks are reordered with either a horizontal or a vertical flip which mode is signalled, and RR-IBC-skip/merge mode indicates IBC-skip/merge mode in which IBC coded reconstruction blocks are reordered with either a horizontal or a vertical flip which mode is signalled.

**Figure 7** illustrates schematically a block diagram of a method 300 of flipping type selection of RR-IBC mode at the encoding side.

In step 310, a best flipping type is selected among a set of flipping types comprising identity (no flipping), horizontal flipping and vertical flipping.

For example, a best flipping type is selected by optimising a rate-distortion trade-off.

In step 320, the best flipping type is signalled in a bitstream.

Signalling the best flipping type decreases the coding efficiency of a block of a video picture.

The problem solved by the present invention is to reduce this signal over cost.

At least one exemplary embodiment of the present application has been devised with the foregoing in mind.

SUMMARY

The following section presents a simplified summary of the at least one exemplary embodiment in order to provide a basic understanding of some aspects of the present application. This summary is not an extensive overview of an exemplary embodiment. It is not intended to identify key or critical elements of an exemplary embodiment. The following summary merely presents some aspects of the at least one exemplary embodiment in a simplified form as a prelude to the more detailed description provided elsewhere in the document.

According to a first aspect of the present application, there is provided a method of intra-predicting a block of a video picture according to a first intra-prediction mode using a first geometry transform identified by a first geometry transform type, wherein the method comprises:

- determining whether at least one neighboring block is predicted according to a second intra-prediction mode using a second geometry transform identified by a second geometry transform type and;

- if at least one neighboring block is predicted according to the second intra-prediction mode, inferring the first geometry transform type from said second geometry transform type.

In one exemplary embodiment, the first and/or second geometry transform types identify at least one of the following geometry transforms or a combination of at least two of the following geometry transforms:

- a horizontal flipping;

- a vertical flipping;

- a horizontal and vertical flipping;

- a rotation ;

- identity.

In one exemplary embodiment, when none of neighboring blocks is predicted according to the second intra-prediction mode, a first geometry transform type is determined by the first intra-prediction mode.

In one exemplary embodiment, wherein the determined first transform type is signaled in a bitstream.

In one exemplary embodiment, the first geometry transform type is selected among second geometry transform types identifying second geometry transforms used by second intra-prediction modes of neighboring blocks.

In one exemplary embodiment, inferring the first geometry transform type from said second geometry transform type comprises:

- determining a second geometry transform type with more occurrence among second geometry transforms used by the second intra-prediction mode for predicting said at least one neighboring blocks; and

- setting the first geometry transform type as the second geometry transform type with more occurrence.

In one exemplary embodiment, when a single neighboring block is predicted according to a second intra-prediction mode, inferring the first geometry transform type from said second geometry transform type comprises setting the first geometry transform type as the second geometry transform type associated with said second intra-prediction mode.

In one exemplary embodiment, when at least one neighboring block is predicted according to the second intra-prediction mode, the method further comprises signaling in a bitstream an index indicating at least one neighboring block predicted by the second intra-prediction mode using the second geometry transform type with more occurrence.

In one exemplary embodiment, if the second geometry transform type with more occurrence and a first geometry transform type derived from the first intra-prediction mode are not the same, then the method further comprises signaling = in a bitstream the first geometry transform type.

In one exemplary embodiment, a second geometry transform type used by the second intra-prediction mode is obtained from a bitstream or derived from said second intra-prediction mode.

In one exemplary embodiment, when a first geometry transform type determined from a first intra-prediction mode is different from an inferred first geometry transform type, the inferred first geometry transform type is signalled in a bitstream.

In one exemplary embodiment, the first intra-prediction mode is a re-ordered intra-bloc-copy mode with a first geometry transform type indicating at least one of the following geometry transforms or a combination of at least two of the following geometry transforms:

- a horizontal flipping;

- a vertical flipping;

- a horizontal and vertical flipping;

- a rotation ;

- identity;

and the second intra-prediction is the intra template-matching prediction mode using a second geometry transform type indicating at least one of the following geometry transforms or a combination of at least two of the following geometry transforms:

- a horizontal flipping;

- a vertical flipping;

- a horizontal and vertical flipping;

- a rotation ;

- identity.

In one exemplary embodiment, the first intra-prediction is the intra template-matching prediction mode using a second geometry transform type indicating at least one of the following geometry transforms or a combination of at least two of the following geometry transforms:

- a horizontal flipping;

- a vertical flipping;

- a horizontal and vertical flipping;

- a rotation ;

- identity;

and the second intra-prediction mode is a re-ordered intra-bloc-copy mode with a first geometry transform type indicating at least one of the following geometry transforms or a combination of at least two of the following geometry transforms:

- a horizontal flipping;

- a vertical flipping;

- a horizontal and vertical flipping;

- a rotation ;

- identity.

According to a second aspect of the present application, there is provided a method of encoding a block of a video picture based on a predicted block derived from a method according to the fist aspect.

According to a third aspect of the present application, there is provided a method of decoding a block of a video picture based on a predicted block derived from a method according to the first aspect.

According to a forth aspect of the present application, there is provided an apparatus comprising means for performing one of the method according to the first, second and/or third aspect.

According to a fifth aspect of the present application, there is provided a computer program product including instructions which, when the program is executed by one or more processors, causes the one or more processors to carry out a method according to the first, second and/or third aspect.

According to a sixth aspect of the present application, there is provided a non-transitory storage medium carrying instructions of program code for executing a method according to the first, second and/or third aspect.

The specific nature of at least one of the exemplary embodiments as well as other objects, advantages, features and uses of said at least one of exemplary embodiments will become evident from the following description of examples taken in conjunction with the accompanying drawings.

BRIEF DESCRIPTION OF THE DRAWINGS

Reference will now be made, by way of example, to the accompanying drawings which show exemplary embodiments of the present application, and in which:

**Figure 1** shows an example of coding-tree unit in accordance with HEVC;

**Figure 2** shows an example of partitioning coding units into prediction units in accordance with HEVC;

**Figure 3** shows an example of a CTU division in accordance with WC;

**Figure 4** shows examples of split modes supported in the multi-type tree partitioning in accordance with WC;

**Figure 5** shows a schematic block diagram of steps of a method 100 of encoding a video picture VP in accordance with prior art;

**Figure 6** shows a schematic block diagram of steps of a method 200 of decoding a video picture VP in accordance with prior art;

**Figure 7** illustrates schematically a block diagram of a method 300 of flipping type selection of RR-IBC mode at the encoding side in accordance with prior art;

**Figure 8** illustrates schematically a block diagram of a method 600 of intra-predicting the target block based on template matching in accordance with exemplary embodiments;

**Figure 9** illustrates a search area defined for predicting a target block TB of a video picture;

**Figure 10** illustrates the method 400 of **Figure 8** when the geometry transform is a horizontal flipping in accordance with exemplary embodiments;

**Figure 11** illustrates some examples of neighborhood template determination according to flipping (geometry transform type) in accordance with exemplary embodiments;

**Figure 12** illustrates some examples of neighborhood template determination according to rotations (geometry transform type) in accordance with exemplary embodiments;

**Figure 13** illustrates schematically a block diagram of a method 500 of intra-predicting a block of a video picture according to a first intra-prediction mode using a first geometry transform in accordance with exemplary embodiment.

**Figure 14** illustrates an example of neighbouring blocks in accordance with an exemplary embodiment;

**Figure 15** illustrates schematically a block diagram of a method 600 of intra-predicting a block of a video picture at an encoding side by using a first intra-prediction mode using a first geometry transform type in accordance with exemplary embodiment;

**Figure 16** illustrates schematically a block diagram of a variant 700 of method 600 as discussed in relation with **Figure 15;**

**Figure 17** illustrates schematically a block diagram of a method 800 of intra-predicting a block of a video picture by using a first intra-prediction mode using a first geometry transform type in accordance with exemplary embodiment;

**Figure 18** illustrates schematically a block diagram of a method 900 of intra-predicting a block of a video picture when the first intra-prediction mode is the RR-IBC mode, and the second intra-prediction is the ITMP mode in accordance with the first exemplary embodiment;

**Figure 19** illustrates schematically a block diagram of a variant 1000 of the method 900 of **Figure 18;**

**Figure 20** illustrates schematically a block diagram of a method 1100 of intra-predicting a block of a video picture when the first intra-prediction mode is the ITMP mode, and the second intra-prediction is the RR-IBC mode in accordance with exemplary embodiment;

**Figure 21** illustrates schematically a block diagram of a method 1200 of intra-predicting a block of a video picture when the first intra-prediction mode is the ITMP mode, and the second intra-prediction is the RR-IBC mode in accordance with exemplary embodiment;

**Figure 22** illustrates schematically a block diagram of a method 1300 of intra-predicting a block of a video picture when the first intra-prediction mode is the ITMP mode, and the second intra-prediction is the RR-IBC mode in accordance with exemplary embodiment;

**Figure 23** illustrates a schematic block diagram of an example of a system in which various aspects and exemplary embodiments are implemented.

Similar or same elements are referenced with the same reference numbers.

DESCRIPTION OF EXEMPLARY EMBODIMENTS

At least one of the exemplary embodiments is described more fully hereinafter with reference to the accompanying figures, in which examples of at least one of the exemplary embodiments are depicted. An exemplary embodiment may, however, be embodied in many alternate forms and should not be construed as limited to the examples set forth herein. Accordingly, it should be understood that there is no intent to limit exemplary embodiments to the particular forms disclosed. On the contrary, the present application is intended to cover all modifications, equivalents, and alternatives falling within the spirit and scope of the present application.
At least one of the aspects generally relates to video picture encoding and decoding, one other aspect generally relates to transmitting a bitstream provided or encoded and one other aspects relates to receiving/accessing a decoded bitstream.
At least one of the exemplary embodiments is described for encoding/decoding a video picture but extends to the encoding/decoding of video pictures (sequences of pictures) because each video picture is sequentially encoded/decoded as described below.

Moreover, the at least one exemplary embodiments are not limited to the current version of VVC. The at least one exemplary embodiment may apply to pre-existing or future-developed, and extensions of VVC and recommendations. Unless indicated otherwise, or technically precluded, the aspects described in the present application may be used individually or in combination.

A pixel corresponds to the smallest display unit on a screen, which can be composed of one or more sources of light (1 for monochrome screen or 3 or more for colour screens).

A video picture, also denoted frame or picture frame, comprises at least one component (also called picture component, or channel) determined by a specific picture/video format which specifies all information relative to pixel values and all information which may be used by a display unit and/or any other device to display and/or to decode video picture data related to said video picture.

A video picture comprises at least one component usually expressed in the shape of an array of samples.

A monochrome video picture comprises a single component and a color video picture may comprise three components.

For example, a color video picture may comprise a luma (or luminance) component and two chroma components when the picture/video format is the well-known (Y,Cb,Cr) format or may comprise three color components (one for Red, one for Green and one for Blue) when the picture/video format is the well-known (R, G,B) format.

Each component of a video picture may comprise a number of samples relative to a number of pixels of a screen on which the video picture is intended to be display. In variants, the number of samples comprised in a component may be a multiple (or fraction) of a number of samples comprised in another component of a same video picture.

For example, in the case of a video format comprising a luma component and two chroma component like the (Y,Cb,Cr) format, dependent on the color format considered, the chroma component may contain half the number of samples in width and/or height, relative to the luma component.

A sample is the smallest visual information unit of a component composing a video picture. A sample value may be, for example a luma or chroma value or a colour value of a (R, G, B) format.

A reconstructed sample is a sample which has been encoded according to method 100 and decoded according to method 200.

A pixel value is the value of a pixel of a screen. A pixel value may be represented by one sample for monochrome video picture and by multiple co-located samples for color video picture. Co-located samples associated with a pixel mean samples corresponding to the location of a pixel in the screen.

It is common to consider a video picture as being a set of pixel values, each pixel being represented by at least one sample.

A block of a video picture is a set of samples of one component of the video picture. A block of at least one luma sample or a block of at least one chroma sample may be considered when the picture/video format is the well-known (Y,Cb,Cr) format, or a block of at least one color sample when the picture/video format is the well-known (R, G, B) format.

The at least one exemplary embodiment is not limited to a particular picture/video format.

In the present application, a RR-IBC mode indicates the RR-IBC mode as defined by JVET-Z0159 (Non-EE2: Reconstruction-Reordered IBC for screen content coding, Z. Deng et al, April 2022) and integrated in ECM (Algorithm description of Enhanced Compression Model 6 (ECM 6), M. Coban et al, JVET-AA2025, July 2022), in which a geometry transform type may indicate at least one of the following geometry transform or a combination of at least two of the following geometry transforms:

- a horizontal flipping;

- a vertical flipping;

- a horizontal and vertical flipping;

- a rotation ;

- identity.

Method 300 of **Figure 7** is then amended in accordance with exemplary embodiment. Step 310 is replaced by step 330, in the course of which a best geometry transform type is selected among the set of geometry transforms comprising at least one of the above geometry transform or a combination of at least two of the following geometry transforms, and step 320 is replaced by step 340, the best geometry transform type is signalled in a bitstream.

In the following, an Intra Template Matching Prediction (ITMP) mode is an intra prediction mode of a target block TB (block of the video picture to be predicted). A prediction block of the target block is obtained based on the best reference block located in a search area (reconstructed samples of the video picture).

A target template patch TTP is associated with the target block TB. The target template patch TTP is built from available reconstructed samples in the target block neighborhood TBN. The target block neighborhood TBN defines positions of available reconstructed samples used for building the target template patch TTP.

Availability of reconstructed samples in the target block neighborhood TBN depends on position of the target block TB compared to the video picture or search area boundaries.

Both at the encoder and decoder, the best reference block results from a candidate template matching search in the course of which for each current position in a search area, a candidate reference block RB located at the current position is considered and a candidate reference template patch RTP is associated with said candidate reference block RB.

A cost is evaluated for each reference block RB by comparing reconstructed samples of a reference template patch RTP and reconstructed samples of a target template patch TTP associated with a target block TB (block of the video picture to be predicted).

The best reference block is then the candidate reference template patch RTP that provides the minimal cost. The best reference block is the prediction block of the target block.

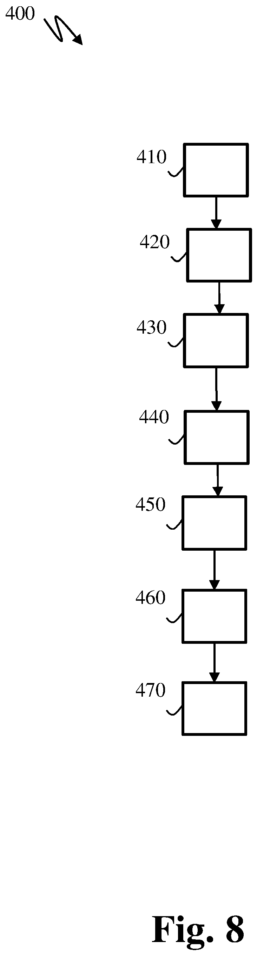

**Figure 8** illustrates schematically a block diagram of a method 400 of intra-predicting the target block TB based on template matching in accordance with exemplary embodiments.

Method 400 is implemented the same way both by method 100 (encoding) and method 200 (decoding) saving thus data signalling against controlled extra complexity.

Method 400 is based on template matching candidate search that compares the target template patch TTP with a candidate reference template patch RTP associated with a reference block RB located at a position of a search area..

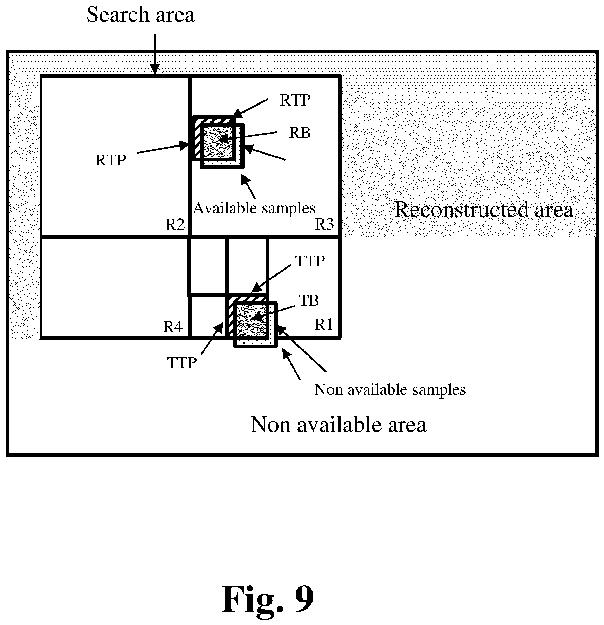

**Figure 9** illustrates a search area defined for predicting a target block TB of a video picture.

Usually, the search area comprises four spatial areas R1, R2, R3 and R4. Area R1 is the current CTU that comprises the target block TB (block to be predicted of the video picture), area R2 is the top left CTU, R3 is the above CTU and R4 is the left CTU.

The width SearchRange_w and the height SearchRange_h of the areas R1-R3 are set proportional to the target block width BlkW and the target block height BlkH to have a fixed number of comparisons per pixel. That is:

$$SearchRange\_w = a * BlkW$$

$$SearchRange\_h = a * BlkH \qquad (2)$$

where 'a' is a constant integer value that controls the gain/complexity trade-off. The factor 'a' may depend on the targeted block width and height, target template width (e.g., fixed at 4 samples) and/or the CTU size. In practice, 'a' is equal to 5.

In step 410 of **Figure 8,** a target block neighborhood TBN is defined according to availability of reconstructed samples in the current CTU that comprises the target block TB and in surrounding CTUs. The target block neighborhood TBN defines positions of available reconstructed samples used for building a target template patch TTP as discussed later.

For example, as illustrated in **Figure 9,** in case a vertical or horizontal flipping occurs on the target block TB, adjacent samples located below or on the right of the target block, respectively, are not available (not yet reconstructed) and cannot be used to generate a target block neighborhood TBN used in the template matching candidate search.

The target block neighborhood TBN is a "L-shaped template" type (as illustrated in **Figure 9)** if reconstructed samples in the target block L-shaped neighborhood are available, a "left template" type if only reconstructed samples in the left part of the target block TB are available (i.e. above CTU samples are not available typically when TB comes up to the top video picture border or search zone R), a "above template" type if only reconstructed samples in the above part of the target block TB are available (i.e. left CTU samples are not available typically when the target block TB comes up to the left video picture border or search zone R) or "no template" if no reconstructed samples surrounding the target block is available (typically when the target block TB comes up to the top-left video picture corner or search zone R).

If the target block neighborhood TBN is "no template", then in step 330 the prediction block used for prediction the target block TB is set as a DC (Direct Coding) value, e.g. $1 << (1 - bitdepth_Y)$ where $bitdepth_Y$ represents the bit depth of luma samples of the video picture.

In step 430, a candidate reference block RB located at the current position is considered and a candidate reference template patch RTP is associated with said candidate reference block RB. The candidate reference template RTP is built from reconstructed samples in a candidate reference block neighborhood RBN.

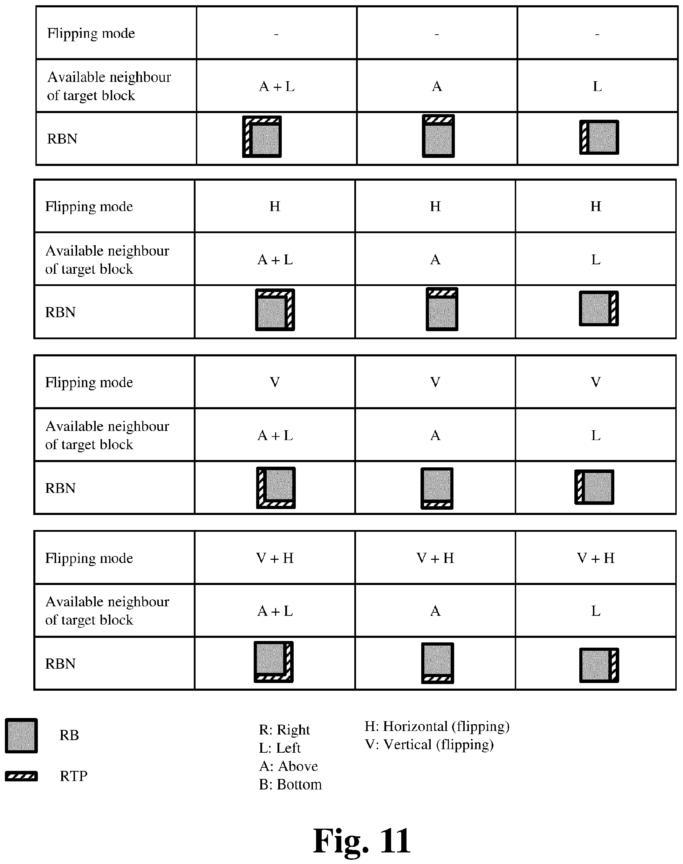

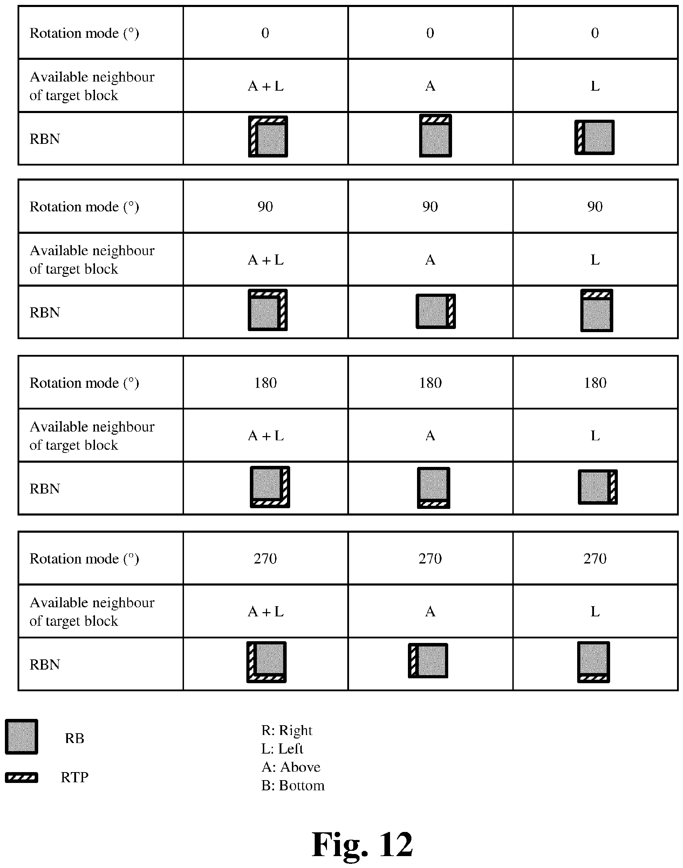

A candidate reference block neighborhood RBN is associated with said candidate reference block RB. A candidate reference block neighborhood RBN defines positions of reconstructed samples in the search area in a neighborhood of said candidate reference block RB. The candidate reference block neighborhood RBN is defined according to a target block neighborhood TBN, i.e. the positions defined by the candidate reference block neighborhood RBN are defined according to the positions of the target block neighborhood TBN, and a geometry transform type GTT (refers to **Figures 11** and **12** for examples).

A geometry transform type GTT identifies a geometry transform GT.

A candidate reference template patch RTP associated with said candidate reference block RB is obtained. The candidate reference template patch RTP comprises reconstructed samples. Said reconstructed samples are obtained by applying a geometry transform GT, identified by the geometry transform type GTT, on the reconstructed samples in the candidate reference block neighborhood RBN.

For instance, if the target block neighborhood TBN indicates that above and left neighboring reconstructed samples of target block TB are available, the target template patch TTP comprises above and left neighboring reconstructed samples of the target block TB. If the geometry transform GT is a horizontal flipping, the transformed reconstructed sample positions correspond to above and right reconstructed samples in the candidate reference block neighborhood RBN.

In another example, if the target block neighborhood TBN indicates that above and left neighboring reconstructed samples of target block TB are available, the target template patch TTP comprises above and left neighboring reconstructed samples of the target block TB. If the geometry transform GT is a vertical flipping, the transformed reconstructed sample positions correspond to bottom and left reconstructed samples in the candidate reference block neighborhood RBN.

The reconstructed samples of the target block and the reconstructed samples of a candidate reference template patch RTP do not directly correspond (i.e. are not co-located with regards to the reference and target block neighborhoods) because the geometry transform GT has been applied on reconstructed sample positions.

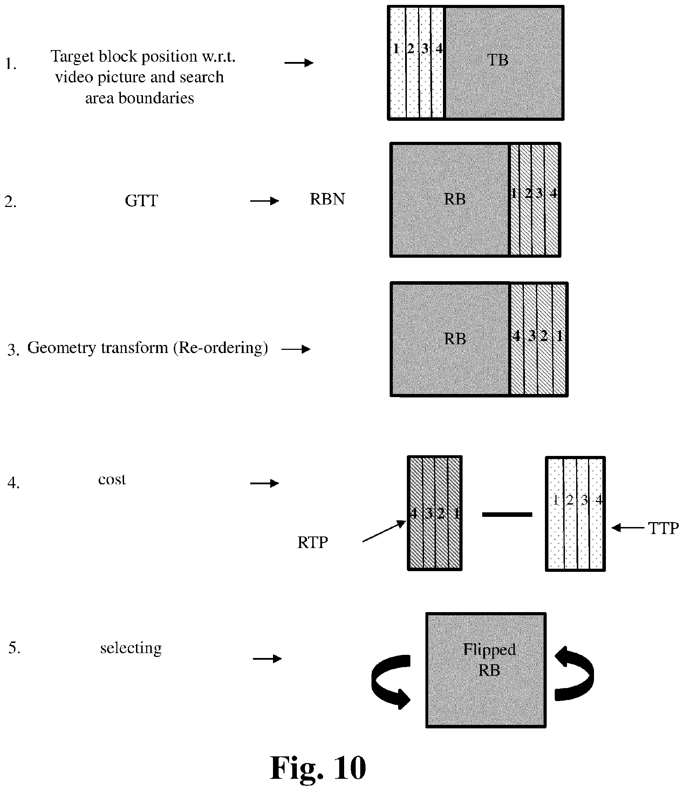

Example of re-ordered transformed samples is given in step 3 of **Figure 10** when the geometry transform GT is a horizontal flipping.

In step 440, a cost is associated with the candidate reference block RB by comparing reconstructed samples of the candidate reference template patch RTP and the reconstructed samples of the target template patch TTP.

In one exemplary embodiment, the cost is evaluated by a Sum of Absolute Difference (SAD) between reconstructed samples of the reference template patch RTP and reconstructed samples of the target template patch TTP.

In step 450, a candidate reference block is selected. It corresponds to a candidate reference template patch RTP that provides the lowest cost. The selected candidate reference block RB is associated with a geometry transform type GTT that identifies the geometry transform GT applied on reconstructed sample positions.

In step 460, an intra-prediction block for the target block TB is generated by applying the geometry transform GT, identified by the geometry transform type GTT associated with the selected candidate reference block RB, to reconstructed samples of the selected candidate reference block RB.

In one exemplary embodiment of method 400, in step 470, the geometry transform type GTT associated with the selected candidate reference block RB is signaled in a bitstream B.

In one exemplary embodiment, geometry transform type indicates at least one of the following geometry transforms or a combination of at least two of the following geometry transforms :

- a horizontal flipping ;

- a vertical flipping ;

- a rotation ;

- identity.

In one exemplary embodiment, a rotation angle of the rotation is a multiple of 90°.

In some implementations (with high-end processing capabilities), combining rotations and flipping transforms is advantageous because it begets geometry transforms that cannot be generated from pure combination of flipping or rotations, increasing the number of candidates i.e. improving signal adaptation.

**Figure 10** illustrates the method 400 when the geometry transform is a horizontal flipping in accordance with exemplary embodiments.

In step 1, a target block neighbourhood is analysed to determine room for a search area R, and available reconstructed samples in the target block neighborhood TBN are identified.

In the example, only the reconstructed samples located on the left neighborhood of the target block TB are available. The target block neighborhood TBN is of type "left template" (band of 4 samples aside the target block TB).

In step 2, the candidate reference block neighborhood RBN is determined according to the target block neighborhood TBN reconstructed samples availability and a geometry transform type GTT (see **Figure 11)** so that the candidate reference block neighborhood RBN is located on the right of candidate reference block RB in this example considering horizontal flipping GTT.

In step 3, a geometry transform GT associated to the geometry transform type GTT, here a horizontal flipping, is applied on the reconstructed samples of the candidate reference block neighborhood RBN. This consists, here, in a horizontal reordering of these sample positions. The candidate reference template patch RTP comprises reconstructed samples located at the re-ordered reconstructed sample positions. The output of step 3 begets samples constituting the reference template patch RTP.

When a horizontal flipping is applied on samples of the candidate reference block RB, as illustrated on **Figure 10,** the transformed reconstructed samples are re-ordered according to the distance to the candidate reference block centre. As illustrated on **Figure 10,** 4 reconstructed sample positions with indices 1, 2, 3 and 4 (step 2) are horizontally flipped and correspond respectively to transformed reconstructed sample positions indices 4, 3, 2 and 1 (step 3). When the geometry transform is a rotation according to a direction (clockwise or anticlockwise), the samples positions in the candidate reference block neighborhood RBN of the candidate reference block RB samples are re-ordered according to the direction of the rotation.

In step 4, for a given target block TB, a cost is associated with each candidate reference block RB by comparing reconstructed samples of the candidate reference template patch RTP and the reconstructed samples of the target template patch TTP.

In step 5, the candidate reference block RB associated with a geometry transform type GTT is selected. The selected candidate reference block corresponds to the candidate reference block RB associated with the minimum cost. The geometry transform GT identified by the geometry transform type GTT associated with the selected candidate reference block RB, is applied on the reconstructed samples of the selected candidate reference block RB. Here the selected candidate reference block RB is horizontally flipped, and the intra-prediction block for the target block TB is the horizontally flipped selected candidate reference block RB.

**Figure 11** illustrates some examples of neighborhood template determination according to flipping (geometry transform type) in accordance with exemplary embodiments.

When the above and left neighboring samples of a target block TB are available and the geometry transform GT is an identity function, a horizontal, vertical or horizontal and vertical flipping, then the candidate reference block neighborhood RBN indicates a "L-shaped template" which layout for the candidate reference block RB depends on the flipping mode.

When only the above neighboring samples of target block TB are available and the geometry transform is an identity function or a horizontal flipping, then the candidate reference block neighborhood RBN indicates a "above template" which layout for the candidate reference block RB depends on the flipping mode.

When only the above neighboring samples of target block TB are available and the geometry transform is a vertical or horizontal and vertical flipping, then the candidate reference block neighborhood RBN indicates a "bottom template" which layout for the candidate reference block RB depends on the flipping mode.

When only the left neighboring samples of target block TB are available and the geometry transform is the identity function or a vertical flipping, then the candidate reference block neighborhood RBN indicates a "left template" which layout for the candidate reference block RB depends on the flipping mode.

When only the left neighboring samples of target block TB are available and the geometry transform is a horizontal or horizontal and vertical flipping, then the candidate reference block neighborhood RBN indicates a "right template" which layout for the candidate reference block RB depends on the flipping mode.

**Figure 12** illustrates some examples of neighborhood template determination according to rotations (geometry transform type) in accordance with exemplary embodiments.

When the above and left neighboring samples of a target block TB are available, the candidate reference block neighborhood RBN indicates a "L-shaped template". The "L-shaped template" layout also depends on the degree of the rotation.

When only the above neighboring samples of target block TB are available, the candidate reference block neighborhood RBN is either the "above template' if the rotation degree equal to 0, the "right template' if the rotation degree equal to 90, the "bottom template' if the rotation degree equal to 180, and the "left template' if the rotation degree equal to 270.

When only the left neighboring samples of target block TB are available, the candidate reference block neighborhood RBN is either the "left template' if the rotation degree equal to 0, the "above template' if the rotation degree equal to 90, the "right template' if the rotation degree equal to 180, and the "bottom template' if the rotation degree equal to 270.

Generally speaking, the present invention relates to a method of intra-predicting a block of a video picture according to a first intra-prediction mode using a first geometry transform identified by a first geometry transform type. The method determines whether at least one neighboring block is predicted according to a second intra-prediction mode using a second geometry transform identified by a second geometry transform type and, if at least one neighboring block is predicted according to the second intra-prediction mode, the first geometry transform type is inferred from said second geometry transform type.

The present invention is advantageous because it avoids the first geometry transform type signaling and thus improves the coding efficiency of a block prediction based on the first intra-prediction mode.

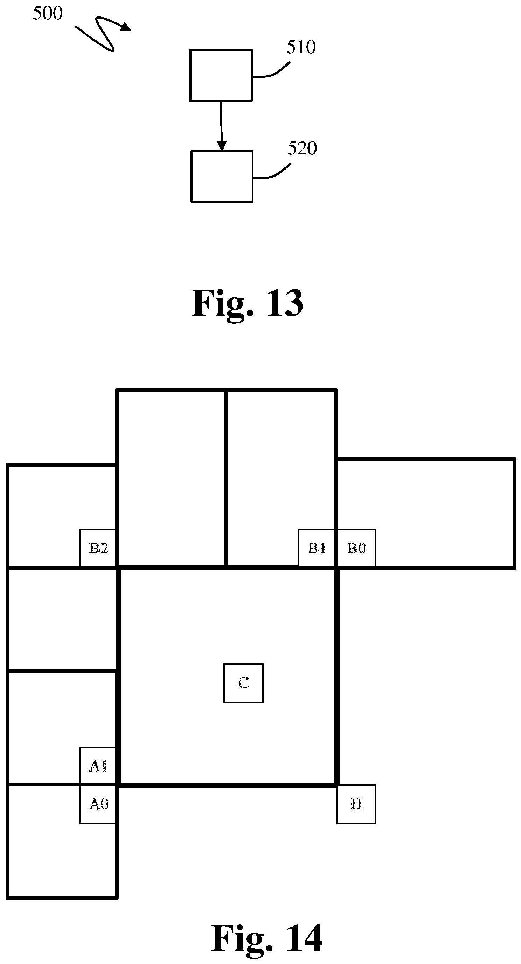

**Figure 13** illustrates schematically a block diagram of a method 500 of intra-predicting a block of a video picture according to a first intra-prediction mode using a first geometry transform in accordance with exemplary embodiment.

In step 510, method 500 determines whether at least one neighboring block is predicted according to a second intra-prediction mode using a second geometry transform identified by a second geometry transform type.

In step 520, if at least one neighboring block is predicted according to the second intra-prediction mode, the first geometry transform type is inferred from second geometry transform types identifying geometry transforms used by second intra-prediction modes for predicting said at least one neighboring block.

In one exemplary embodiment, the first and second geometry transform types identify at least one of the following geometry transforms or a combination of at least two of the following geometry transforms:

-    a horizontal flipping;

- a vertical flipping;

- a horizontal and vertical flipping;

- a rotation ;

- identity.

Combining rotations and flipping transforms is advantageous because combinations of several flipping may be replaced by rotations reducing thus the complexity of the geometry transform of the reconstructed samples.

In one exemplary embodiment, a rotation angle of the rotation is a multiple of 90°.

**Figure 14** illustrates an example of neighbouring blocks in accordance with an exemplary embodiment.

The target block C is intended to be predicted according to the first intra-prediction mode.

The neighbouring blocks A0, A1, B0, B1, B2 and H are examples of neighbouring blocks of the target block C which are checked. For example, a single block B2 is predicted according to a second intra-prediction mode, and the second geometry transform type used by said second intra-prediction mode indicates a flipping. The first geometry transform type used by the first intra-prediction mode is then inferred from said second geometry transform type. For example, the first geometry transform type used by the first intra-prediction mode for predicting the target block C is the flipping type used by the second intra-prediction mode.

In one exemplary embodiment, a geometry transform type used by an intra-prediction mode for encoding/decoding a block of a video picture is stored in a memory, and the second geometry transform type used by the intra-coded neighbouring blocks is obtained from said memory.

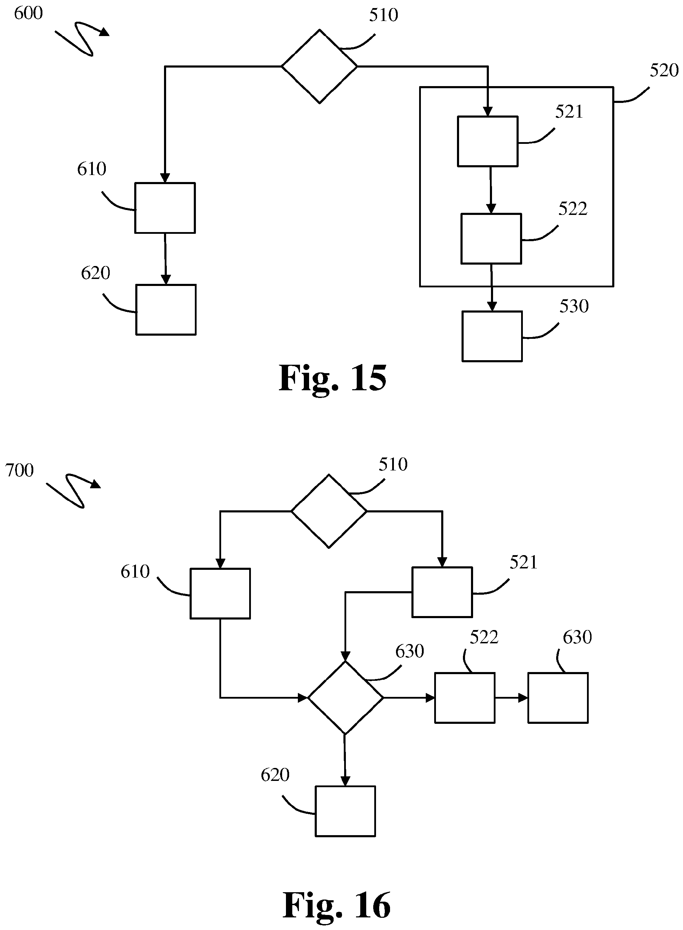

**Figure 15** illustrates schematically a block diagram of a method 600 of intra-predicting a block of a video picture by using a first intra-prediction mode using a first geometry transform type in accordance with exemplary embodiment.

Method 600 is only used by method 100 (encoding).

In step 510, method 600 determines whether at least one neighboring block (for example located at position A0, A1, B0,B1, B2 or H in **Figure 16**) is predicted according to a second intra-prediction mode, said second intra-prediction mode using a second geometry transform identified by a second geometry transform type.

When none of neighboring blocks is predicted according to the second intra-prediction mode, in step 610, a first geometry transform type is determined by the first intra-prediction mode and in step 620 the determined first transform type is signaled in a bitstream.

In one exemplary embodiment, step 610 is step 330 when the first transform type is a flipping type, and step 610 is the method 400 when the first intra-prediction mode is the ITMP mode as discussed in relation with **Figures 8-12.**

In one exemplary embodiment of step 620, signalling the first geometry transform type in a bitstream comprises context-based entropy encoding a binary value (flag) indicating whether the first geometry transform type is signalled in the bitstream or not, said context-based entropy encoding using context depending on a number of neighbouring blocks predicted according to the second intra-prediction mode.

When at least one neighboring block is predicted according to the second intra-prediction mode, the first geometry transform type is not signaled in a bitstream but, in step 520, the first geometry transform type is inferred from second geometry transform types identifying geometry transforms used by second intra-prediction modes for predicting said at least one neighboring block.

In one exemplary embodiment, step 520 comprises sub-steps 521 and 522.

In sub-step 521, a second geometry transform type with more occurrence is determined among the second geometry transforms used by the second intra-prediction mode for predicting said at least one neighboring blocks.

In step 522, the first geometry transform type is set as the second geometry transform type with more occurrence.

In one exemplary embodiment of step 520, when a single neighboring block is predicted according to a second intra-prediction mode, the first geometry transform type is set as the second geometry transform type associated with said second intra-prediction mode.

In one exemplary embodiment, when at least one neighboring block is predicted according to the second intra-prediction mode, in step 530, an index indicating at least one neighboring block predicted by the second intra-prediction mode using the second geometry transform type with more occurrence, is signaled in a bitstream.

In one variant of **Figure 15,** illustrated in **Figure 16,** if the second geometry transform type with more occurrence (step 521) and a first geometry transform type derived from the first intra-prediction mode (step 610) are not the same (step 630), then in step 620, method 700 signals the first geometry transform type in a bitstream. If the second geometry transform type with more occurrence and the first geometry transform are the same, then method 700 sets the first geometry transform as the second geometry transform type with more occurrence (sub-step 522).

In one exemplary embodiment, a second geometry transform type used by the second intra-prediction mode may be obtained from a bitstream or derived from said second intra-prediction mode.

In one exemplary embodiment, when a first geometry transform type determined from a first intra-prediction mode is different from an inferred first geometry transform type, the inferred first geometry transform type is signalled (step 620) in a bitstream.

Alternatively, the inferred first geometry type is never transmitted and inferred from geometry transform types used by the second geometry transform modes for predicting neighbouring blocks.

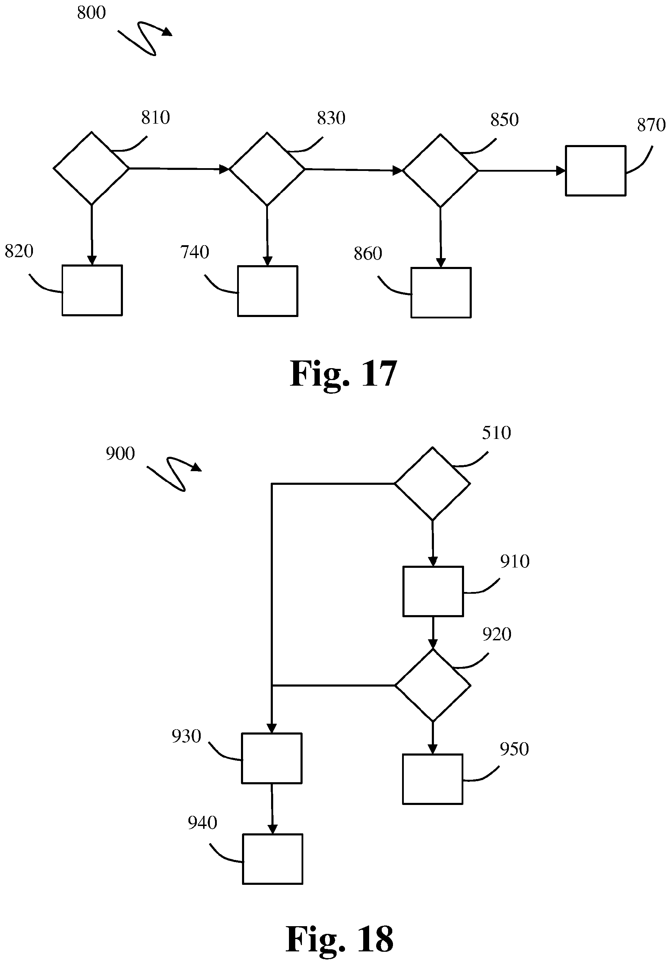

**Figure 17** illustrates schematically a block diagram of a method 800 of intra-predicting a block of a video picture by using a first intra-prediction mode using a first geometry transform type in accordance with exemplary embodiment.

In step 810, if a first neighbouring block (for example A1 in **Figure 14**) is intra-predicted according to a second intra-prediction mode using a first geometry transform type TA1 identifying a first geometry transform T1, in step 820 the first geometry type used by the first intra-prediction mode indicates the geometry transform T1 for predicting the block C.

Otherwise, in step 830, if a second neighbouring block (for example B1 in **Figure 14**) is intra-predicted according to a second intra-prediction mode using a second geometry transform type TA2 indicating a second geometry transform T2, in step 840 the first geometry type used by the first intra-prediction mode indicates the geometry transform T2 for predicting the block C.

Otherwise, in step 850, if the first neighbouring block is intra-predicted according to a second intra-prediction mode using the first geometry transform type TA1, if the second neighbouring block is intra-predicted according to a second intra-prediction mode using the second geometry transform type TA2, and if a third neighbouring block (for example B2 in **Figure 14**) is intra-predicted according to a second intra-prediction mode using a third geometry transform type TB2 indicating either the first T1 or second T2 geometry transform, then in step 860, the first geometry transform type used by the first intra-prediction mode indicates the geometry transform indicated by the third geometry transform type TB2. Otherwise, in step 870, a first geometry transform type is determined by the first intra-prediction mode and signalled in a bitstream, or, alternatively, a second geometry transform type with more occurrence is determined among the second geometry transform type used by the second intra-prediction mode for predicting said at least one neighboring blocks, and the first geometry transform type is inferred from said second geometry transform type with more occurrence (steps 521, 522).

In one exemplary embodiment, the first intra-prediction mode is the RR-IBC mode as discussed above with a first geometry transform type indicating at least one of the following geometry transforms or a combination of at least two of the following geometry transforms:

- a horizontal flipping;

- a vertical flipping;

- a horizontal and vertical flipping;

- a rotation ;

- identity;

and the second intra-prediction is the ITMP mode as discussed in relation with **Figures 8 to 12.**

**Figure 18** illustrates schematically a block diagram of a method 900 of intra-predicting a block of a video picture when the first intra-prediction mode is the RR-IBC mode, and the second intra-prediction is the ITMP mode in accordance with the first exemplary embodiment.

In step 510, method 900 determines whether at least one neighboring block (for example located at position A0, A1, B0,B1, B2 or H in **Figure 14**) is predicted according to an ITMP mode using a second geometry transform identified by a second geometry transform type.

If at least one neighboring block is predicted according to ITMP mode, in step 910, an ITMP predicted neighbouring block is determined and intended to be used as Block Vector Prediction (BVP) candidate for selecting a RR-IBC mode for predicting a block of the video picture. RR-IBC mode thus considers ITMP predicted neighbouring blocks as BVP candidate additionally to the current RR-IBC neighbouring coded blocks (RR-IBC merge).

In one exemplary embodiment of step 910, the ITMP predicted neighbouring block is determined from a geometry transform type identifying a geometry transform type with more occurrence among the geometry transforms used by the ITMP intra-prediction mode for predicting said at least one neighboring blocks (step 521), and the ITMP predicted neighbouring block is determined from an ITMP intra-prediction mode using a geometry transform identified by the geometry transform type with more occurrence.

In step 920, method 900 checks if the selected RR-IBC mode uses said Block Vector Prediction (BVP) candidate.

When the selected RR-IBC mode does not use said Block Vector Prediction (BVP) candidate, in step 930, a best first geometry transform type is selected among a set of first geometry transforms, and in step 940 the best first geometry transform type is signalled in a bitstream.

In variant, the set of first geometry transforms is limited to the ITMP geometry transforms of the neighbouring blocks.

Said variant reduces the number of candidates and thus the complexity.

When the selected RR-IBC mode uses said Block Vector Prediction (BVP) candidate (step 910), in step 950, the first geometry transform type used in RR-IBC mode for predicting the block of the video picture is set as the second geometry transform type used by ITMP mode for predicting the ITMP predicted neighbouring block. Thus, only a merge index is carried and represents both a BVP (ITMP predicted neighbouring block) and the associated geometry transform type.

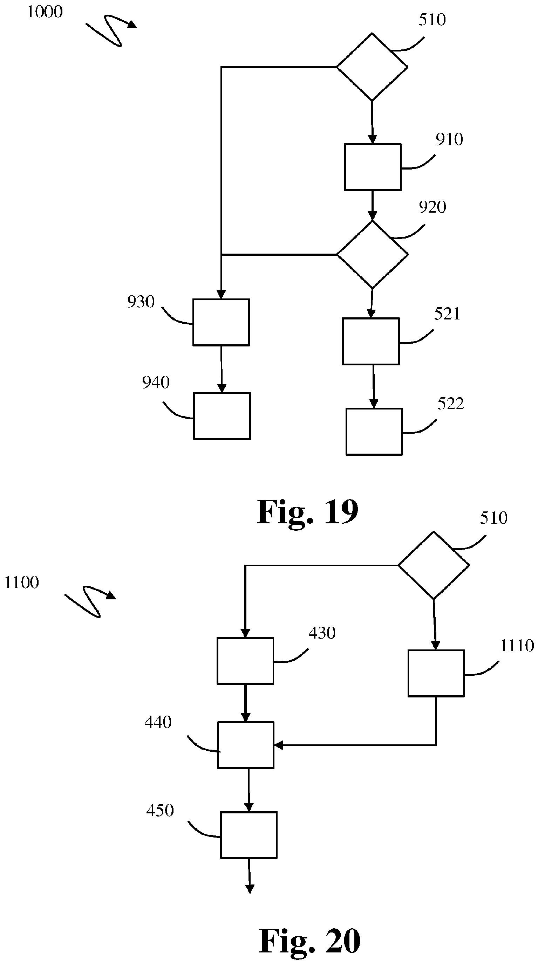

**Figure 19** illustrates schematically a block diagram of a variant 1000 of the method 900 of **Figure 18.**

When the selected RR-IBC mode does not use said Block Vector Prediction (BVP) candidate, a second geometry transform type with more occurrence is determined among the second geometry transform used by the ITMP mode for predicting said at least one neighboring blocks (step 521), and the first geometry transform type used in RR-IBC mode for predicting the block of the video picture is set as the second geometry transform type with more occurrence (step 522).

In one variant, when considering RR-IBC merge, the merge index indicates both BVP and associated geometry transform type, but the HMVP only stores a block vector prediction (not the associated geometry transform type).

In one variant of the first exemplary embodiment, the merge index indicates BVP only and the HMVP stores both the block vector prediction and the associated geometry transform type.

In one exemplary embodiment, the first intra-prediction mode is the ITMP mode as discussed in relation with **Figures 8 to 12,** and the second intra-prediction is a RR-IBC mode as discussed above with a first geometry transform type indicating at least one of the following geometry transforms or a combination of at least two of the following geometry transforms:

- a horizontal flipping;

- a vertical flipping;

- a horizontal and vertical flipping;

- a rotation ;

- identity.

As discussed in **Figures 8 to 12,** at the decoder, ITMP mode either signals a selected geometry transform type but increases bandwidth (signaling penalty) or executes a template-based matching search over different flipping types but increases complexity of the decoder. Inheriting the first geometry transform type from neighboring block cumulate advantages with regards to signaling and complexity, both at the encoder and decoder.

**Figure 20** illustrates schematically a block diagram of a method 1100 of intra-predicting a block of a video picture when the first intra-prediction mode is the ITMP mode, and the second intra-prediction is the RR-IBC mode in accordance with exemplary embodiment.

This method is symmetric at both encoder and decoder sides.

In step 510, method 1100 determines whether at least one neighboring block (e.g. among blocks at position A0, A1, B0, B1, B2) is predicted according to an RR-IBC mode using a second geometry transform identified by a second geometry transform type.

If none of the neighbouring blocks is predicted by a RR-IBC mode, a template matching search is executed over geometry transform type candidates as discussed in **Figures 8 to 12** for predicting the geometry transform type used by the ITMP mode for predicting the block of the video picture.

In brief, in steps 430 and 440, cost is associated with each candidate reference block, each candidate reference block being associated with a geometry transform type. In step 450, a candidate reference block is selected. It corresponds to a candidate reference template patch RTP that provides the lowest cost. The selected candidate reference block RB is associated with a geometry transform type that identifies the geometry transform applied on reconstructed sample positions.

If at least one of said neighbouring blocks is predicted with RR-IBC mode, in step 1110, method 1100 obtains a geometry transform type used by the RR-IBC mode for predicting said at least one neighbouring block is used as geometry transform type candidate.

In one exemplary embodiment of step 1110, the geometry transform type used by the RR-IBC mode for predicting said at least one neighbouring block is the geometry transform type used by RR-IBC prediction mode for predicting said at least one neighbouring blocks with more occurrence.

This exemplary embodiment is advantageous because no signalling with regards to the geometry transform type of the ITMP predicted block C is required as candidates are inferred from neighbouring blocs. Moreover, complexity is statistically reduced when RR-IBC predicted neighbouring blocks do not use certain flipping types (e.g. neighbouring blocks located in positions A1 and B1 are predicted with RR-IBC and use horizontal flipping type). Then, only identity and horizontal flipping types are checked for such a located block C identity among the four possible flipping modes.

In one variant, the set of candidate geometry transform types, from which a geometry transform type is determined for RR-IBC predicting the block C, is limited to the identity mode and the flipping type with more occurrence used by the RR-IBC predicted for predicting neighbouring blocks.

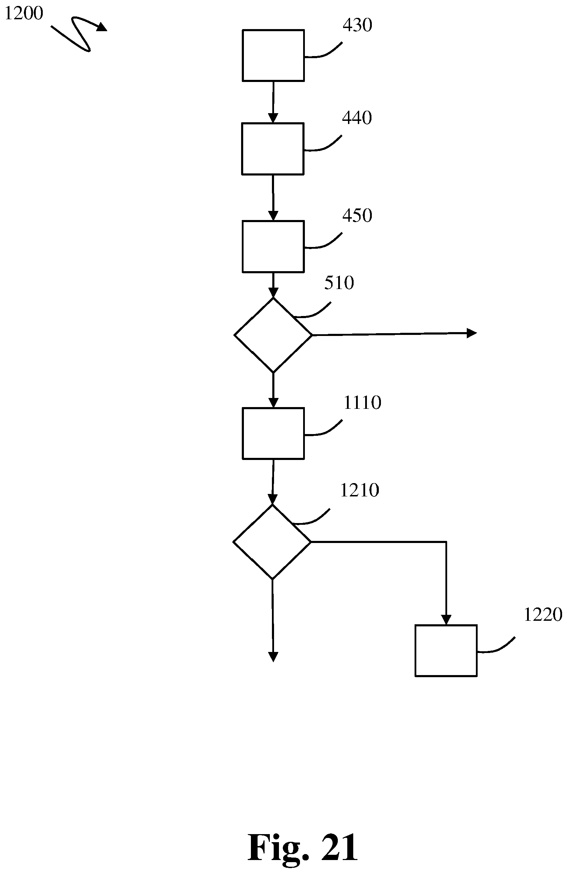

**Figure 21** illustrates schematically a block diagram of a method 1200 of intra-predicting a block of a video picture when the first intra-prediction mode is the ITMP mode, and the second intra-prediction is the RR-IBC mode in accordance with exemplary embodiment.

Method 1200 is used only at the encoder.

A template matching search is executed over candidates as discussed in **Figures 8 to 12** for predicting the geometry transform type used by the ITMP mode for predicting the block of the video picture. In brief, in steps 430 and 440, cost is associated with each candidate reference block, each candidate reference block being associated with a geometry transform type. In step 450, a candidate reference block associated with a geometry transform type is selected. It corresponds to a candidate reference template patch RTP that provides the lowest cost. The selected candidate reference block RB is associated with a geometry transform type that identifies the geometry transform applied on reconstructed sample positions.

In step 510, method 1100 determines whether at least one neighboring block (e.g. among blocks at position A0, A1, B0, B1, B2) is predicted according to an RR-IBC mode using a second geometry transform identified by a second geometry transform type.

If none of the neighbouring blocks is predicted by a RR-IBC mode, method 1200 ends and the geometry type associated with the selected candidate reference block RB is used as a geometry transform type for RR-IBC predicting the block C.

If at least one of said neighbouring blocks is predicted with RR-IBC mode, in step 1110, method 1200 obtains a geometry transform type used by the RR-IBC mode for predicting said at least one neighbouring block is used as geometry transform type candidate.

In step 1210, method 1200 checks whether the geometry type associated with the selected candidate reference block RB and the obtained geometry transform type used by the RR-IBC mode (step 1110) are the same.

If the geometry type associated with the selected candidate reference block RB and the obtained geometry transform type used by the RR-IBC mode (step 1110) are different, in step 1220, the selected candidate reference block RB is signalled in a bitstream.

If the geometry type associated with the selected candidate reference block RB and the obtained geometry transform type used by the RR-IBC mode (step 1110) are the same, the geometry transform type used by the ITMP mode for predicting the block is inferred as the obtained geometry transform type used by the RR-IBC mode (step 1110).

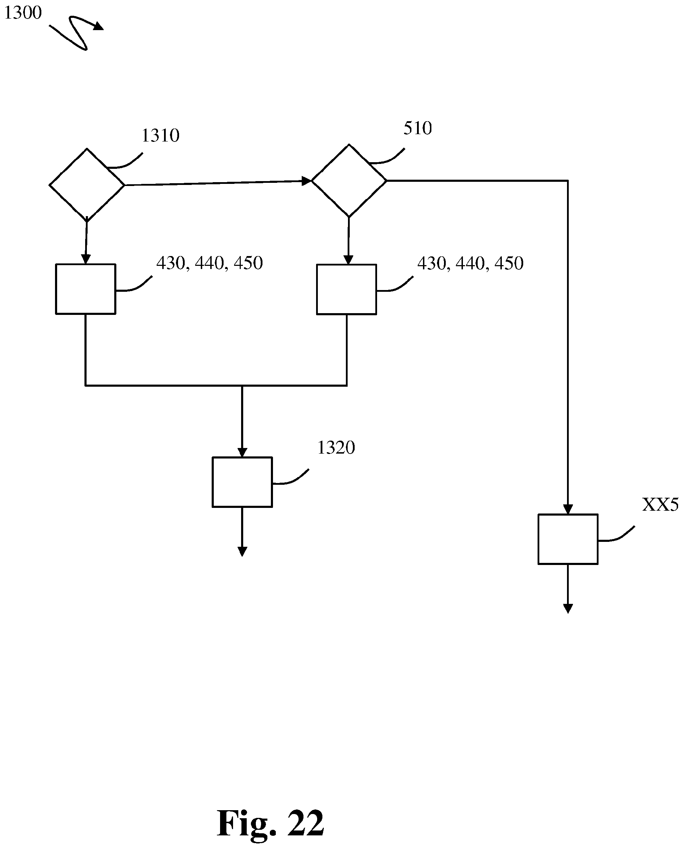

**Figure 22** illustrates schematically a block diagram of a method 1300 of intra-predicting a block of a video picture when the first intra-prediction mode is the ITMP mode, and the second intra-prediction is the RR-IBC mode in accordance with exemplary embodiment.

Method 1300 is used only at the encoder.

In step 1310, method 1300 checks whether a geometry transform type is signalled in a bitstream for ITMP predicting a block of the video picture.

If a geometry transform type is signalled, in step 1320, the geometry transform identified by the signalled geometry transform type is used as a candidate in a template matching search is executed over candidates as discussed in **Figures 8 to 12** for predicting the geometry transform type used by the ITMP mode for predicting the block of the video picture (steps 430, 440, 450). In step 1330, the block of the video picture is predicted from a ITMP mode using a geometry transform identified by the selected geometry transform type provides by the template matching search.

If no geometry transform type is signalled, in step 510, method 1300 determines whether at least one neighboring block (e.g. among blocks at position A0, A1, B0, B1, B2) is predicted according to an RR-IBC mode using a second geometry transform identified by a second geometry transform type.

If none of the neighbouring blocks is predicted by a RR-IBC mode, a template matching search is executed over candidates as discussed in **Figures 8 to 12** for predicting the geometry transform type used by the ITMP mode for predicting the block of the video picture (steps 430, 440, 450).

Alternatively, If none of the neighbouring blocks is predicted by a RR-IBC mode the geometry transform type indicates the identity. This alternative reduces complexity of the decoder compared to the use of a template matching search.

If at least one of said neighbouring blocks is predicted with RR-IBC mode, in step 1110, method 1300 obtains a geometry transform type used by the RR-IBC mode for predicting said at least one neighbouring block, and the geometry transform type used by the ITMP mode for predicting the block of the video picture is set as the obtained geometry transform type.

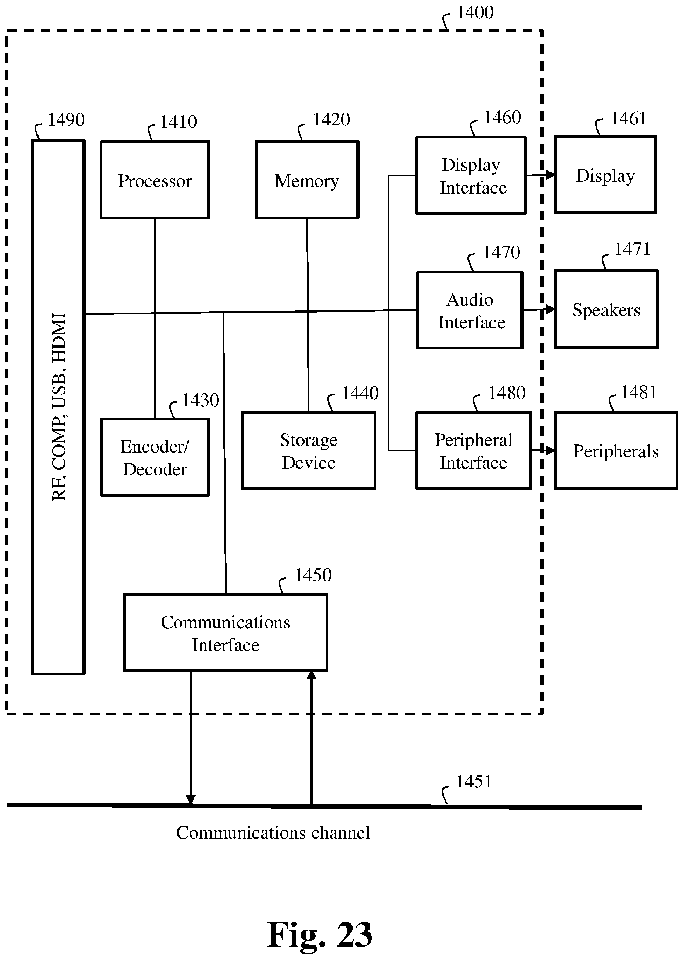

**Figure 23** shows a schematic block diagram illustrating an example of a system 1400 in which various aspects and exemplary embodiments are implemented.

System 1400 may be embedded as one or more devices including the various components described below. In various exemplary embodiments, system 1400 may be configured to implement one or more of the aspects described in the present application.

Examples of equipment that may form all or part of the system 1400 include personal computers, laptops, smartphones, tablet computers, digital multimedia set top boxes, digital television receivers, personal video recording systems, connected home appliances, connected vehicles and their associated processing systems, head mounted display devices (HMD, see-through glasses), projectors (beamers), "caves" (system including multiple displays), servers, video encoders, video decoders, post-processors processing output from a video decoder, pre-processors providing input to a video encoder, web servers, video servers (e.g. a broadcast server, a video-on-demand server or a web server), still or video camera, encoding or decoding chip or any other communication devices. Elements of system 1400, singly or in combination, may be embodied in a single integrated circuit (IC), multiple ICs, and/or discrete components. For example, in at least one exemplary embodiment, the processing and encoder/decoder elements of system 1400 may be distributed across multiple ICs and/or discrete components. In various exemplary embodiments, system 1400 may be communicatively coupled to other similar systems, or to other electronic devices, via, for example, a communications bus or through dedicated input and/or output ports.

System 1400 may include at least one processor 1410 configured to execute instructions loaded therein for implementing, for example, the various aspects described in the present application. Processor 1410 may include embedded memory, input output interface, and various other circuitries as known in the art. System 1400 may include at least one memory 1420 (for example a volatile memory device and/or a non-volatile memory device). System 1400 may include a storage device 1440, which may include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random-Access Memory (DRAM), Static Random-Access Memory (SRAM), flash, magnetic disk drive, and/or optical disk drive. The storage device 1440 may include an internal storage device, an attached storage device, and/or a network accessible storage device, as non-limiting examples.

System 1400 may include an encoder/decoder module 1430 configured, for example, to process data to provide encoded/decoded video picture data, and the encoder/decoder module 1430 may include its own processor and memory. The encoder/decoder module 1430 may represent module(s) that may be included in a device to perform the encoding and/or decoding functions. As is known, a device may include one or both encoding and decoding modules. Additionally, encoder/decoder module 1430 may be implemented as a separate element of system 1400 or may be incorporated within processor 1410 as a combination of hardware and software as known to those skilled in the art.

Program code to be loaded onto processor 1410 or encoder/decoder 1430 to perform the various aspects described in the present application may be stored in storage device 1440 and subsequently loaded onto memory 1420 for execution by processor 1410. In accordance with various exemplary embodiments, one or more of processor 1410, memory 1420, storage device 1440, and encoder/decoder module 1430 may store one or more of various items during the performance of the processes described in the present application. Such stored items may include, but are not limited to video picture data, information data used for encoding/decoding video picture data, a bitstream, matrices, variables, and intermediate or final results from the processing of equations, formulas, operations, and operational logic.

In several exemplary embodiments, memory inside of the processor 1410 and/or the encoder/decoder module 1430 may be used to store instructions and to provide working memory for processing that may be performed during encoding or decoding.

In other exemplary embodiments, however, a memory external to the processing device (for example, the processing device may be either the processor 1410 or the encoder/decoder module 1430) may be used for one or more of these functions. The external memory may be the memory 1420 and/or the storage device 1440, for example, a dynamic volatile memory and/or a non-volatile flash memory. In several exemplary embodiments, an external non-volatile flash memory may be used to store the operating system of a television. In at least one exemplary embodiment, a fast external dynamic volatile memory such as a RAM may be used as working memory for video coding and decoding operations, such as for MPEG-2 part 2 (also known as ITU-T Recommendation H.262 and ISO/IEC 13818-2, also known as MPEG-2 Video), AVC, HEVC, EVC, VVC, AV1, etc.

The input to the elements of system 1400 may be provided through various input devices as indicated in block 1490. Such input devices include, but are not limited to, (i) an RF portion that may receive an RF signal transmitted, for example, over the air by a broadcaster, (ii) a Composite input terminal, (iii) a USB input terminal, (iv) an HDMI input terminal, (v) a bus such as CAN (Controller Area Network), CAN FD (Controller Area Network Flexible Data-Rate), FlexRay (ISO 17458) or Ethernet (ISO/IEC 802-3) bus when the present invention is implemented in the automotive domain.

In various exemplary embodiments, the input devices of block 1490 may have associated respective input processing elements as known in the art. For example, the RF portion may be associated with elements necessary for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which may be referred to as a channel in certain exemplary embodiments, (iv) demodulating the down-converted and band-limited signal, (v) performing error correction, and (vi) demultiplexing to select the desired stream of data packets. The RF portion of various exemplary embodiments may include one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down-converting the received signal to a lower frequency (for example, an intermediate frequency or a near-baseband frequency) or to baseband.

In one set-top box embodiment, the RF portion and its associated input processing element may receive an RF signal transmitted over a wired (for example, cable) medium. Then, the RF portion may perform frequency selection by filtering, down-converting, and filtering again to a desired frequency band.

Various exemplary embodiments rearrange the order of the above-described (and other) elements, remove some of these elements, and/or add other elements performing similar or different functions.

Adding elements may include inserting elements in between existing elements, such as, for example, inserting amplifiers and an analog-to-digital converter. In various exemplary embodiments, the RF portion may include an antenna.

Additionally, the USB and/or HDMI terminals may include respective interface processors for connecting system 1400 to other electronic devices across USB and/or HDMI connections. It is to be understood that various aspects of input processing, for example, Reed-Solomon error correction, may be implemented, for example, within a separate input processing IC or within processor 1410 as necessary. Similarly, aspects of USB or HDMI interface processing may be implemented within separate interface ICs or within processor 1410 as necessary. The demodulated, error corrected, and demultiplexed stream may be provided to various processing elements, including, for example, processor 1410, and encoder/decoder 1430 operating in combination with the memory and storage elements to process the data stream as necessary for presentation on an output device.

Various elements of system 1400 may be provided within an integrated housing. Within the integrated housing, the various elements may be interconnected and transmit data therebetween using suitable connection arrangement 1490, for example, an internal bus as known in the art, including the I2C bus, wiring, and printed circuit boards.

The system 1400 may include communication interface 1450 that enables communication with other devices via communication channel 1451. The communication interface 1450 may include, but is not limited to, a transceiver configured to transmit and to receive data over communication channel 1451. The communication interface 1450 may include, but is not limited to, a modem or network card and the communication channel 1451 may be implemented, for example, within a wired and/or a wireless medium.

Data may be streamed to system 1400, in various exemplary embodiments, using a Wi-Fi network such as IEEE 802.11. The Wi-Fi signal of these exemplary embodiments may be received over the communications channel 1451 and the communications interface 1450 which are adapted for Wi-Fi communications. The communications channel 1451 of these exemplary embodiments may be typically connected to an access point or router that provides access to outside networks including the Internet for allowing streaming applications and other over-the-top communications.

Other exemplary embodiments may provide streamed data to the system 1400 using a set-top box that delivers the data over the HDMI connection of the input block 1490.

Still other exemplary embodiments may provide streamed data to the system 1400 using the RF connection of the input block 1490.

The streamed data may be used as a way for signaling information used by the system 1400. The signaling information may comprise the bitstream B and/or information such a number of pixels of a video picture and/or any coding/decoding setup parameters.

It is to be appreciated that signaling may be accomplished in a variety of ways. For example, one or more syntax elements, flags, and so forth may be used to signal information to a corresponding decoder in various exemplary embodiments.

System 1400 may provide an output signal to various output devices, including a display 1461, speakers 1471, and other peripheral devices 1481. The other peripheral devices 1481 may include, in various examples of exemplary embodiments, one or more of a stand-alone DVR, a disk player, a stereo system, a lighting system, and other devices that provide a function based on the output of system 1400.

In various exemplary embodiments, control signals may be communicated between the system 1400 and the display 1461, speakers 1471, or other peripheral devices 1481 using signaling such as AV.Link (Audio/Video Link), CEC (Consumer Electronics Control), or other communications protocols that enable device-to-device control with or without user intervention.

The output devices may be communicatively coupled to system 1400 via dedicated connections through respective interfaces 1460, 1470, and 1480.

Alternatively, the output devices may be connected to system 1400 using the communications channel 1451 via the communications interface 1450. The display 1461 and speakers 1471 may be integrated in a single unit with the other components of system 1400 in an electronic device such as, for example, a television.

In various exemplary embodiments, the display interface 1460 may include a display driver, such as, for example, a timing controller (T Con) chip.

The display 1461 and speaker 1471 may alternatively be separate from one or more of the other components, for example, if the RF portion of input 1490 is part of a separate set-top box. In various exemplary embodiments in which the display 1461 and speakers 1471 may be external components, the output signal may be provided via dedicated output connections, including, for example, HDMI ports, USB ports, or COMP outputs.

In **Figures 1-23,** various methods are described herein, and each of the methods includes one or more steps or actions for achieving the described method. Unless a specific order of steps or actions is required for proper operation of the method, the order and/or use of specific steps and/or actions may be modified or combined.

Some examples are described with regard to block diagrams and/or operational flowcharts. Each block represents a circuit element, module, or portion of code which includes one or more executable instructions for implementing the specified logical function(s). It should also be noted that in other implementations, the function(s) noted in the blocks may occur out of the indicated order. For example, two blocks shown in succession may, in fact, be executed substantially concurrently or the blocks may sometimes be executed in the reverse order, depending on the functionality involved.

The implementations and aspects described herein may be implemented in, for example, a method or a process, an apparatus, a computer program, a data stream, a bitstream, or a signal. Even if only discussed in the context of a single form of implementation (for example, discussed only as a method), the implementation of features discussed may also be implemented in other forms (for example, an apparatus or computer program).

The methods may be implemented in, for example, a processor, which refers to processing devices in general, including, for example, a computer, a microprocessor, an integrated circuit, or a programmable logic device. Processors also include communication devices.

Additionally, the methods may be implemented by instructions being performed by a processor, and such instructions (and/or data values produced by an implementation) may be stored on a computer readable storage medium. A computer readable storage medium may take the form of a computer readable program product embodied in one or more computer readable medium(s) and having computer readable program code embodied thereon that is executable by a computer. A computer readable storage medium as used herein may be considered a non-transitory storage medium given the inherent capability to store the information therein as well as the inherent capability to provide retrieval of the information therefrom. A computer readable storage medium may be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present exemplary embodiments may be applied, is merely an illustrative and not an exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

An apparatus may be implemented in, for example, appropriate hardware, software, and firmware.

Examples of such apparatus include personal computers, laptops, smartphones, tablet computers, digital multimedia set top boxes, digital television receivers, personal video recording systems, connected home appliances, head mounted display devices (HMD, see-through glasses), projectors (beamers), "caves" (system including multiple displays), servers, video encoders, video decoders, post-processors processing output from a video decoder, pre-processors providing input to a video encoder, web servers, set-top boxes, and any other device for processing video pictures or other communication devices. As should be clear, the equipment may be mobile and even installed in a mobile vehicle.

Computer software may be implemented by the processor 1410 or by hardware, or by a combination of hardware and software. As a non-limiting example, the exemplary embodiments may be also implemented by one or more integrated circuits. The memory 1420 may be of any type appropriate to the technical environment and may be implemented using any appropriate data storage technology, such as optical memory devices, magnetic memory devices, semiconductor-based memory devices, fixed memory, and removable memory, as non-limiting examples. The processor 1410 may be of any type appropriate to the technical environment, and may encompass one or more of microprocessors, general purpose computers, special purpose computers, and processors based on a multi-core architecture, as non-limiting examples.

As will be evident to one of ordinary skill in the art, implementations may produce a variety of signals formatted to carry information that may be, for example, stored or transmitted. The information may include, for example, instructions for performing a method, or data produced by one of the described implementations. -For example, a signal may be formatted to carry the bitstream of a described exemplary embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

The terminology used herein is for the purpose of describing particular exemplary embodiments only and is not intended to be limiting. As used herein, the singular forms "a", "an", and "the" may be intended to include the plural forms as well, unless the context clearly indicates otherwise. It will be further understood that the terms "includes/comprises" and/or "including/comprising" when used in this specification, may specify the presence of stated, for example, features, integers, steps, operations, elements, and/or components but do not preclude the presence or addition of one or more other features, integers, steps, operations, elements, components, and/or groups thereof. Moreover, when an element is referred to as being "responsive" or "connected" or "associated with" to another element, it may be directly responsive or connected to or associated with the other element, or intervening elements may be present. In contrast, when an element is referred to as being "directly responsive" or "directly connected" to or "directly associated with" other element, there are no intervening elements present.

It is to be appreciated that the use of any of the symbol/term "/", "and/or", and "at least one of", for example, in the cases of "A/B", "A and/or B" and "at least one of A and B", may be intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Various numeric values may be used in the present application. The specific values may be for example purposes and the aspects described are not limited to these specific values.

It will be understood that, although the terms first, second, etc. may be used herein to describe various elements, these elements are not limited by these terms. These terms are only used to distinguish one element from another. For example, a first element could be termed a second element, and, similarly, a second element could be termed a first element without departing from the teachings of the present application. No ordering is implied between a first element and a second element.

Reference to "one exemplary embodiment" or "an exemplary embodiment" or "one implementation" or "an implementation", as well as other variations thereof, is frequently used to convey that a particular feature, structure, characteristic, and so forth (described in connection with the exemplary embodiment/implementation) is included in at least one exemplary embodiment/implementation. Thus, the appearances of the phrase "in one exemplary embodiment" or "in an exemplary embodiment" or "in one implementation" or "in an implementation", as well any other variations, appearing in various places throughout the present application are not necessarily all referring to the same exemplary embodiment.

Similarly, reference herein to "in accordance with an exemplary embodiment/example/implementation" or "in an exemplary embodiment/example/implementation", as well as other variations thereof, is frequently used to convey that a particular feature, structure, or characteristic (described in connection with the exemplary embodiment/example/implementation) may be included in at least one exemplary embodiment/example/implementation. Thus, the appearances of the expression "in accordance with an exemplary embodiment/example/implementation" or "in an exemplary embodiment/example/implementation" in various places in the present application are not necessarily all referring to the same exemplary embodiment/example/implementation, nor are separate or alternative exemplary embodiment/examples/implementation necessarily mutually exclusive of other exemplary embodiments/examples/implementation.

Reference numerals appearing in the claims are by way of illustration only and shall have no limiting effect on the scope of the claims. Although not explicitly described, the present exemplary embodiments/examples and variants may be employed in any combination or sub-combination.

When a figure. is presented as a flow diagram, it should be understood that it also provides a block diagram of a corresponding apparatus. Similarly, when a figure is presented as a block diagram, it should be understood that it also provides a flow diagram of a corresponding method/process.

Although some of the diagrams include arrows on communication paths to show a primary direction of communication, it is to be understood that communication may occur in the opposite direction to the depicted arrows.

Various implementations involve decoding. "Decoding", as used in this application, may encompass all or part of the processes performed, for example, on a received video picture (including possibly a received bitstream which encodes one or more video picture) in order to produce a final output suitable for display or for further processing in the reconstructed video domain. In various exemplary embodiments, such processes include one or more of the processes typically performed by a decoder. In various exemplary embodiments, such processes also, or alternatively, include processes performed by a decoder of various implementations described in the present application, for example,

As further examples, in one exemplary embodiment "decoding" may refer only to de-quantizing, in one exemplary embodiment "decoding" may refer to entropy decoding, in another exemplary embodiment "decoding" may refer only to differential decoding, and in another exemplary embodiment "decoding" may refer to combinations of de-quantizing, entropy decoding and differential decoding. Whether the phrase "decoding process" may be intended to refer specifically to a subset of operations or generally to the broader decoding process will be clear based on the context of the specific description and is believed to be well understood by those skilled in the art.

Various implementations involve encoding. In an analogous way to the above discussion about "decoding", "encoding" as used in the present application may encompass all or part of the processes performed, for example, on an input video picture in order to produce an output bitstream. In various exemplary embodiments, such processes include one or more of the processes typically performed by an encoder. In various exemplary embodiments, such processes also, or alternatively, include processes performed by an encoder of various implementations described in this application.

As further examples, in one exemplary embodiment "encoding" may refer only to quantizing, in one exemplary embodiment "encoding" may refer only to entropy encoding, in another exemplary embodiment "encoding" may refer only to differential encoding, and in another exemplary embodiment "encoding" may refer to combinations of quantizing, differential encoding and entropy encoding. Whether the phrase "encoding process" may be intended to refer specifically to a subset of operations or generally to the broader encoding process will be clear based on the context of the specific descriptions and is believed to be well understood by those skilled in the art.

Additionally, the present application may refer to "obtaining" various pieces of information. Obtaining the information may include one or more of, for example, estimating the information, calculating the information, predicting the information, or retrieving the information from memory, processing the information, moving the information, copying the information, erasing the information, calculating the information, determining the information, predicting the information, or estimating the information.

Additionally, this application may refer to "receiving" various pieces of information. Receiving the information may include one or more of, for example, accessing the information, or receiving information from a communication network.

Also, as used herein, the word "signal" refers to, among other things, indicating something to a corresponding decoder. For example, in certain exemplary embodiments the encoder signals a particular information such as coding parameter or encoded video picture data. In this way, in an exemplary embodiment the same parameter may be used at both the encoder side and the decoder side. Thus, for example, an encoder may transmit (explicit signaling) a particular parameter to the decoder so that the decoder may use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various exemplary embodiments. It is to be appreciated that signaling may be accomplished in a variety of ways. For example, one or more syntax elements, flags, and so forth are used to signal information to a corresponding decoder in various exemplary embodiments. While the preceding relates to the verb form of the word "signal", the word "signal" may also be used herein as a noun.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method of intra-predicting a block of a video picture according to a first intra-prediction mode using a first geometry transform identified by a first geometry transform type, wherein the method comprises:

   - determining (510) whether at least one neighboring block is predicted according to a second intra-prediction mode using a second geometry transform identified by a second geometry transform type and;
   - if at least one neighboring block is predicted according to the second intra-prediction mode, inferring (520) the first geometry transform type from said second geometry transform type.

2. The method of claim 1, wherein the first and/or second geometry transform types identify at least one of the following geometry transforms or a combination of at least two of the following geometry transforms:

   - a horizontal flipping;
   - a vertical flipping;
   - a horizontal and vertical flipping;
   - a rotation ;
   - identity.

3. The method of claim 1 or 2, wherein when none of neighboring blocks is predicted according to the second intra-prediction mode, a first geometry transform type is determined (610) by the first intra-prediction mode.

4. The method of claim 3, wherein the determined first transform type is signaled (620) in a bitstream.

5. The method of claim 3, wherein the first geometry transform type is selected among second geometry transform types identifying second geometry transforms used by second intra-prediction modes of neighboring blocks.

6. The method of one of claims 1 to 5, wherein inferring (520) the first geometry transform type from said second geometry transform type comprises:

   - determining (521) a second geometry transform type with more occurrence among second geometry transforms used by the second intra-prediction mode for predicting said at least one neighboring blocks; and
   - setting (522) the first geometry transform type as the second geometry transform type with more occurrence.

7. The method of one of claims 1 to 6, wherein when a single neighboring block is predicted according to a second intra-prediction mode, inferring (520) the first geometry transform type from said second geometry transform type comprises setting the first geometry transform type as the second geometry transform type associated with said second intra-prediction mode.

8. The method of 6 or 7, wherein when at least one neighboring block is predicted according to the second intra-prediction mode, the method further comprises signaling (620) in a bitstream an index indicating at least one neighboring block predicted by the second intra-prediction mode using the second geometry transform type with more occurrence.

9. The method of claims 6 to 8, wherein if the second geometry transform type with more occurrence and a first geometry transform type derived from the first intra-prediction mode are not the same, then the method further comprises signaling (620) in a bitstream the first geometry transform type.

10. The method of one of claims 1 to 8, wherein a second geometry transform type used by the second intra-prediction mode may be obtained from a bitstream or derived from said second intra-prediction mode.

11. The method of one of claims 5 to 10, when a first geometry transform type determined from a first intra-prediction mode is different from an inferred first geometry transform type, the inferred first geometry transform type is signalled (620) in a bitstream.

12. The method of one claims 1 to 11, wherein the first intra-prediction mode is a re-ordered intra-bloc-copy (RR-IBC) mode with a first geometry transform type indicating at least one of the following geometry transforms or a combination of at least two of the following geometry transforms:

   - a horizontal flipping;
   - a vertical flipping;
   - a horizontal and vertical flipping;
   - a rotation ;
   - identity;

and the second intra-prediction is the intra template-matching prediction (ITMP) mode using a second geometry transform type indicating at least one of the following geometry transforms or a combination of at least two of the following geometry transforms:

   - a horizontal flipping;
   - a vertical flipping;
   - a horizontal and vertical flipping;
   - a rotation ;
   - identity.

13. The method of one claims 1 to 11, wherein the first intra-prediction is the intra template-matching prediction mode using a second geometry transform type indicating at least one of the following geometry transforms or a combination of at least two of the following geometry transforms:

   - a horizontal flipping;
   - a vertical flipping;
   - a horizontal and vertical flipping;
   - a rotation ;
   - identity;

and the second intra-prediction mode is a re-ordered intra-bloc-copy mode with a first geometry transform type indicating at least one of the following geometry transforms or a combination of at least two of the following geometry transforms:

   - a horizontal flipping;
   - a vertical flipping;
   - a horizontal and vertical flipping;
   - a rotation ;
   - identity.

14. A method of encoding a block of a video picture based on a prediction block of said block, wherein the prediction block is derived from one method of one of claims 1 to 13.

15. A method of decoding a block of a video picture based on a prediction block of said block, wherein the prediction block is derived from one method of one of claims 1 to 13.

16. An apparatus comprising means for performing one of the method claimed in any one of claims 1 to 13.

**17.** A computer program product including instructions which, when the program is executed by one or more processors, causes the one or more processors to carry out a method claimed in any one of claims 1 to 13.

**18.** A non-transitory storage medium carrying instructions of program code for executing a method claimed in any one of claims 1 to 13.

**Fig. 1**

**Fig. 2**

**Fig. 3**

**Fig. 4**

**Fig. 5**

200

**Fig. 6**

300

**Fig. 7**

Fig. 8

**Fig. 9**

1. Target block position w.r.t. video picture and search area boundaries →

2. GTT → RBN

3. Geometry transform (Re-ordering) →

4. cost →

RTP     TTP

5. selecting →

**Fig. 10**

| Flipping mode | - | - | - |
|---|---|---|---|
| Available neighbour of target block | A + L | A | L |
| RBN | | | |

| Flipping mode | H | H | H |
|---|---|---|---|
| Available neighbour of target block | A + L | A | L |
| RBN | | | |

| Flipping mode | V | V | V |
|---|---|---|---|
| Available neighbour of target block | A + L | A | L |
| RBN | | | |

| Flipping mode | V + H | V + H | V + H |
|---|---|---|---|
| Available neighbour of target block | A + L | A | L |
| RBN | | | |

RB

RTP

R: Right    H: Horizontal (flipping)
L: Left    V: Vertical (flipping)
A: Above
B: Bottom

# Fig. 11

| Rotation mode (°) | 0 | 0 | 0 |
|---|---|---|---|
| Available neighbour of target block | A + L | A | L |
| RBN | | | |

| Rotation mode (°) | 90 | 90 | 90 |
|---|---|---|---|
| Available neighbour of target block | A + L | A | L |
| RBN | | | |

| Rotation mode (°) | 180 | 180 | 180 |
|---|---|---|---|
| Available neighbour of target block | A + L | A | L |
| RBN | | | |

| Rotation mode (°) | 270 | 270 | 270 |
|---|---|---|---|
| Available neighbour of target block | A + L | A | L |
| RBN | | | |

RB

RTP

R: Right
L: Left
A: Above
B: Bottom

**Fig. 12**

500

510

520

**Fig. 13**

B2

B1 B0

C

A1

A0

H

**Fig. 14**

600

510

520

610

521

620

522

530

## Fig. 15

700

510

610

521

522   630

630

620

## Fig. 16

800

810    830    850    870

820    740    860

## Fig. 17

900    510

910

920

930

950

940

## Fig. 18

1000

510

910

920

930

521

940

522

**Fig. 19**

510

1100

430

1110

440

450

**Fig. 20**

1200

430

440

450

510

1110

1210

1220

# Fig. 21

1300

1310

510

430, 440, 450

430, 440, 450

1320

XX5

**Fig. 22**

Fig. 23

Europäisches
Patentamt

European
Patent Office

Office européen
des brevets

# EUROPEAN SEARCH REPORT

Application Number

EP 22 30 6423

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CAO JIAN ET AL: "Intra Block Copy Mirror Mode for Screen Content Coding in Versatile Video Coding", IEEE ACCESS, IEEE, USA, vol. 9, 19 February 2021 (2021-02-19), pages 31390-31400, XP011840282, DOI: 10.1109/ACCESS.2021.3060448 [retrieved on 2021-02-25] * sections III, III.A, IV.A * | 1-18 | INV. H04N19/105 H04N19/176 H04N19/593 |
| X,D | DENG (BYTEDANCE) Z ET AL: "Non-EE2: Reconstruction-Reordered IBC for screen content coding", 26. JVET MEETING; 20220420 - 20220429; TELECONFERENCE; (THE JOINT VIDEO EXPLORATION TEAM OF ISO/IEC JTC1/SC29/WG11 AND ITU-T SG.16 ), , no. JVET-Z0159 ; m59493 14 April 2022 (2022-04-14), XP030301082, Retrieved from the Internet: URL:https://jvet-experts.org/doc_end_user/documents/26_Teleconference/wg11/JVET-Z0159-v1.zip JVET-Z0159.docx [retrieved on 2022-04-14] * section 2 * | 1-18 | |
| | -/-- | | TECHNICAL FIELDS SEARCHED (IPC) H04N |

The present search report has been drawn up for all claims

| Place of search | Date of completion of the search | Examiner |
|---|---|---|
| Munich | 31 January 2023 | Montoneri, Fabio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 22 30 6423

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Y-U YOON (KAU) ET AL: "CE3-related: Most Frequent Mode (MFM) for Intra Mode Coding", 12. JVET MEETING; 20181003 – 20181012; MACAO; (THE JOINT VIDEO EXPLORATION TEAM OF ISO/IEC JTC1/SC29/WG11 AND ITU-T SG.16 ), , no. JVET-L0155 1 October 2018 (2018-10-01), XP030194170, Retrieved from the Internet: URL:http://phenix.int-evry.fr/jvet/doc_end _user/documents/12_Macao/wg11/JVET-L0155-v 3.zip JVET-L0155_r2.docx [retrieved on 2018-10-01] * section 2 * | 1-18 | |
| A | US 2022/217335 A1 (WANG JUN [CN] ET AL) 7 July 2022 (2022-07-07) * paragraphs [0032] – [0052] * | 1-18 | |
| A | CN 111 586 420 A (UNIV SUN YAT SEN) 25 August 2020 (2020-08-25) * abstract; figures 1, 3, 4 * | 1-18 | TECHNICAL FIELDS SEARCHED (IPC) |

The present search report has been drawn up for all claims

| Place of search | Date of completion of the search | Examiner |
|---|---|---|
| Munich | 31 January 2023 | Montoneri, Fabio |

EPO FORM 1503 03.82 (P04C01)

## ANNEX TO THE EUROPEAN SEARCH REPORT
## ON EUROPEAN PATENT APPLICATION NO.

EP 22 30 6423

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2023

| Patent document cited in search report | | Publication date | Patent family member(s) | | Publication date |
|---|---|---|---|---|---|
| US 2022217335 | A1 | 07-07-2022 | CN 114424533 | A | 29-04-2022 |
| | | | EP 4037314 | A1 | 03-08-2022 |
| | | | JP 2022553624 | A | 26-12-2022 |
| | | | KR 20220065059 | A | 19-05-2022 |
| | | | US 2022217335 | A1 | 07-07-2022 |
| | | | WO 2021056433 | A1 | 01-04-2021 |
| CN 111586420 | A | 25-08-2020 | NONE | | |

EPO FORM P0459

For more details about this annex : see Official Journal of the European Patent Office, No. 12/82